# EUROPÄISCHE PATENTSCHRIFT

(11) **EP 1 537 624 B1**
(45) Veröffentlichungstag und Bekanntmachung des Hinweises auf die Patenterteilung: **12.05.2010**
(21) Anmeldenummer: 03769184.7
(22) Anmeldetag: 11.09.2003
(51) Int. Cl.: H01Q 1/24, H04B 1/38

(54) **FUNKKOMMUNIKATIONSGERÄT MIT REDUZIERTEM SAR-WERT**
WIRELESS COMMUNICATION DEVICE HAVING A REDUCED SAR VALUE
APPAREIL DE TELEPHONIE MOBILE A DEBIT D'ABSORPTION SPECIFIQUE REDUIT

(30) Priorität: 12.09.2002 DE 10242386; 18.10.2002 DE 10248756
(43) Veröffentlichungstag der Anmeldung: 08.06.2005
(73) Patentinhaber: Palm, Inc., Sunnyvale, CA 94085-2801 (US)
(72) Erfinder: GLOCKER, Wolfgang, 87700 Memmingen (DE); WEINBERGER, Martin, 81373 München (DE); HUBER, Stefan, 80798 München (DE); KOWALSKI, Thorsten, 80992 München (DE); SCHREIBER, Michael, 85655 Aying-Göggenhofen (DE); OELSCHLÄGER, Martin, 12247 Berlin (DE)
(74) Vertreter: Samson & Partner
(86) Internationale Anmeldenummer: PCT/DE2003/002983
(87) Internationale Veröffentlichungsnummer: WO 2004/027924

(56) Entgegenhaltungen:
- WO-A-01/33665
- WO-A-02/15333
- WO-A-02/071534
- DE-A- 10 204 877
- US-B1- 6 246 374

## Beschreibung

Die Erfindung betrifft ein Funkkommunikationsgerät mit reduziertem SAR-Wert mit mindestens einer Leiterplatte und mit mindestens einer daran angekoppelten Antenne zum Abstrahlen und/oder Empfangen von elektromagnetischen Funkstrahlungsfeldern, wobei die Antenne auf derjenigen Bestückungsfläche der Leiterplatine angeordnet ist, die beim Tragen des Funkkommunikationsgeräts am Körper und/oder beim Einbringen des Funkkommunikationsgeräts zum Sprechen und/oder Hören in den Kopfbereich des jeweiligen Benutzers von diesem abgewandt ist.

Bei Funkkommunikationsgeräten ist es wünschenswert, die Belastungsdosis an elektromagnetischer Strahlung im Körpergewebe eines Benutzers beim Tragen des Funkkommunikationsgerätes am Körper und/oder beim Einbringen des Funkkommunikationsgeräts zum Sprechen und/oder Hören in den Kopfbereich des jeweiligen Benutzers möglichst niedrig zu halten. Ein spezifisches Messkriterium dafür, welchen Strahlungsbelastungen der jeweilige Benutzer tatsächlich ausgesetzt ist, ist insbesondere der sogenannte SAR-Wert (Specific Absorption Rate). Dieser gibt die spezifische Absorptionsrate in Watt pro Kilogramm an, mit der ein vorgebbarer Gewebsvolumenbereich, wie z.B. im Kopf des jeweiligen Benutzers, durch die elektromagnetischen Funkstrahlungsfelder thermisch belastet wird. Zur Bestimmung der SAR-Werte von Funkkommunikationsgeräten als Maß für die thermische Aufheizung eines bestimmten Gewebsvolumenbereichs wird vorzugsweise ein Messverfahren verwendet, wie es detailliert im europäischen Normenvorschlag EN 50361 beschrieben ist.

Aus der US 6,246,374 B1 ist ein Klapp-Mobilfunkgerät mit einer Hauptantenne und einem in die Klappe des Mobilfunkgeräts integriertes parasitäres Antennenelement bekannt. Das parasitäre Antennenelement wird im aufgeklappten Zustand des Klapp-Mobilfunkgeräts an die Hauptantenne angekoppelt, um als passives Strahlungselement zu wirken.

Der Erfindung liegt die Aufgabe zugrunde, einen Weg aufzuzeigen, wie der SAR-Wert eines Funkkommunikationsgeräts in einfacher Weise gezielt weiter reduziert werden kann.

Diese Aufgabe wird bei einem Funkkommunikationsgerät der eingangs genannten Art dadurch gelöst, dass mindestens ein erstes zusätzliches, stromleitfähiges Korrekturelement zur SAR-Wertreduzierung auf einer der Antenne gegenüberliegenden Vorderseite der Leiterplatte angekoppelt und ausgebildet ist und auf dem ersten Korrekturelement und/oder der Leiterplatte zusätzliche Abstimm-Mittel zum Abstimmen der Phasenlage und/oder Amplitude eines elektrischen Stroms vorgesehen sind, wobei die Amplitudenhöhe und/oder Phasenlage von elektrischen Strömen auf der Antenne, der Leiterplatte und dem Korrekturelement in einem resultierenden, überlagerten Gesamtstromfluss zueinander so eingestellt sind, dass das Maximum der sich insgesamt aufgrund dieser Ströme resultierenden SAR-Verteilung im Körpergewebe eines Benutzers beim Tragen des Funkkommunikationsgeräts oder beim Einbringen des Funkkommunikationsgeräts zum Sprechen und/oder Hören in den Kopfbereich dieses Benutzers abgesenkt wird.

Es ist also mindestens ein zusätzliches, stromleitfähiges Korrekturelement so an die Leiterplatte an deren der Antenne gegenüberliegenden Bestückungsseite angekoppelt und ausgebildet, dass der auf ihm zum Fließen kommende elektrische Strom hinsichtlich Amplitudenhöhe und/oder Phasenlage an die elektrischen Ströme auf der Antenne und der Leiterplatte derart angepasst ist, dass insgesamt aufgrund dieser Ströme ein SAR-Feld mit minimiertem bzw. abgesenktem Maximum bewirkt ist.

Auf diese Weise sind unzulässig hochdosierte "hot spots", d.h. Gewebsvolumenbereiche höherer thermischer Belastung gegenüber Gewebsvolumenbereichen geringerer Erwärmung beim bestimmungsgemäßen Gebrauch des jeweiligen Funkkommunikationsgeräts, wie z.B. beim Tragen am Körper oder beim Einbringen zum Sprechen und/oder Hören in den Kopfbereich dieses Benutzers, weitgehend vermieden. Mit anderen Worten ausgedrückt kann also der für das jeweilige Funkkommunikationsgerät charakteristische SAR-Wert weiter abgesenkt werden.

Die Erfindung betrifft weiterhin eine Leiterplatte mit mindestens einem zusätzlichen, SAR-Wert-reduzierenden Korrekturelement für ein erfindungsgemäßes Funkkommunikationsgerät.

Sonstige Weiterbildungen der Erfindung sind in den Unteransprüchen wiedergegeben.

Die Erfindung und ihre Weiterbildungen werden nachfolgend anhand von Zeichnungen näher erläutert.

### Es zeigen:

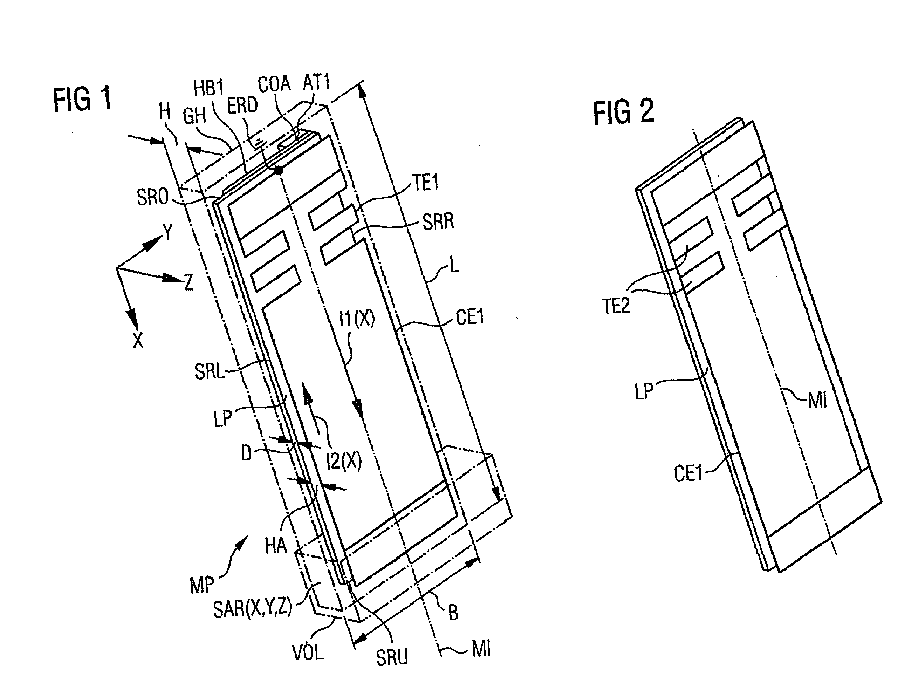

- Figur 1: schematisch in perspektivischer Darstellung ein erstes Ausführungsbeispiel eines erfindungsgemäßen Funkkommunikationsgeräts, an dessen Leiterplatte zusätzlich ein erstes stromleitfähiges, SAR-Wert-reduzierendes Korrekturelement angekoppelt ist, in das zur Abstimmung bzw. zum Tunen des dortigen Stromflusses ein zweites stromleitfähiges Korrekturelement integriert ist,
- Figur 2: in schematischer Darstellung die Leiterplatte des Funkkommunikationsgeräts nach Figur 1 mit dem ersten angekoppelten, SAR-Wert-reduzierenden Korrekturelement, in das zur Abstimmung des dortigen Stromflusses ein gegenüber Figur 1 modifiziertes, zweites stromleitfähiges Korrekturelement integriert ist,

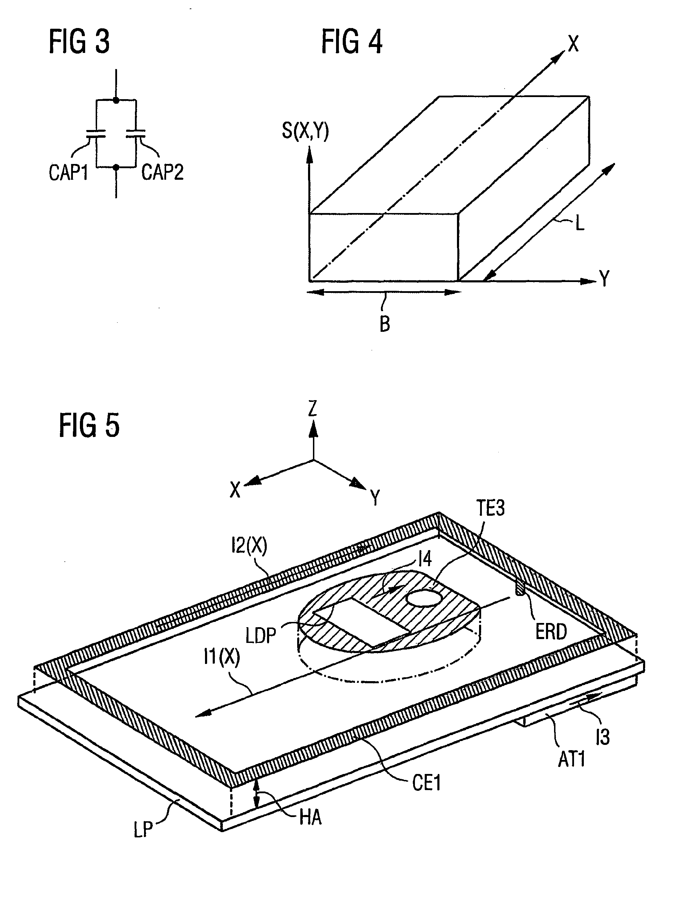

- Figur 3: ein vereinfachtes, elektrisches Ersatzschaltbild für das SAR-Wert-reduzierende, erste Korrekturelement von Figur 2 mit dem zugeordneten, zweiten Korrekturelement in Bezug auf deren Ankopplung an die Leiterplatte,
- Figur 4: schematisch in räumlicher Darstellung ein idealsiertes, weitgehend harmonisiertes SAR-Feld über die Gesamtfläche der Leiterplatte des Funkkommunikationsgeräts nach Figur 1 betrachtet, das sich aufgrund des überlagerten Gesamtstromflusses der elektrischen Ströme auf der Leiterplatte, dem daran angekoppelten ersten und zweiten Korrekturelement, sowie der Antenne insgesamt einstellt und bezüglich seiner Amplitudenwerte kleiner als ohne Korrekturmaßnahme ist,
- Figur 5: schematisch in räumlicher Darstellung eine weitere Variante eines erfindungsgemäßen Funkkommunikationsgeräts, bei dem die Mittel zum Abstimmen der Phasenlage und/oder Amplitude des elektrischen Stroms auf dem ersten Korrekturelement gegenüber den Abstimm- bzw. Tuning- Mitteln des Funkkommunikationsgeräts von Figur 1 modifiziert sind,

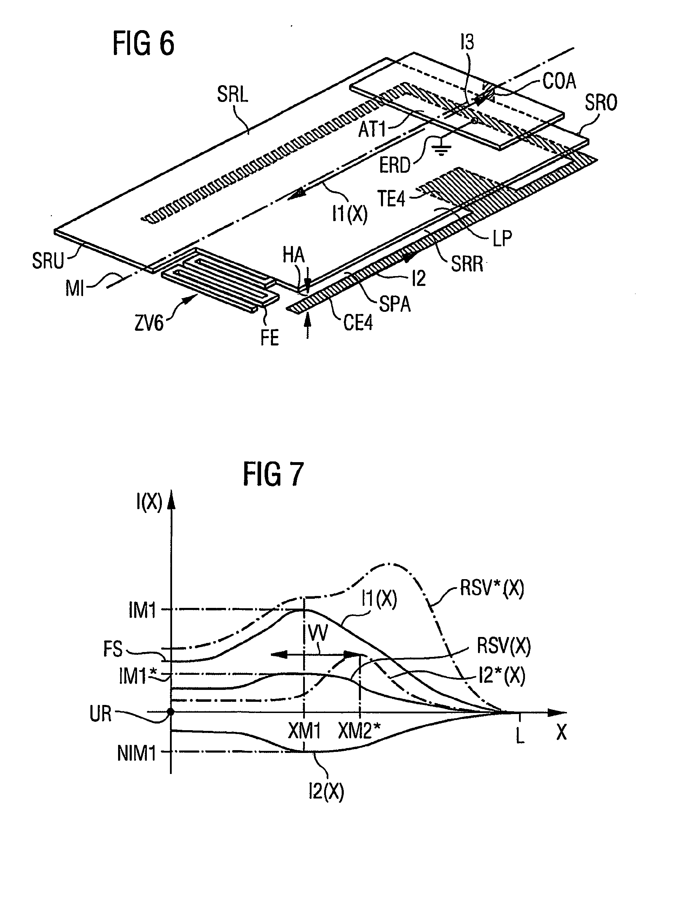

- Figur 6: schematisch in räumlicher Darstellung eine weitere Ausführungsform eines erfindungsgemäßen Funkkommunikationsgeräts mit weiteren, alternativen AbstimmMitteln für das SAR-Wert-reduzierende Korrekturelement dieses Funkkommunikationsgeräts, und
- Figur 7: in schematischer Darstellung die örtliche Verteilung des für den SAR-Effekt wirksamen elektrischen Summenstromes, der beim Betrieb des Funkkommunikationsgeräts nach Figur 1 entlang der Längserstreckung dessen Leiterplatte ohne und mit erfindungsgemäß abgestimmtem Korrekturelement zum Fließen kommt .

Elemente mit gleicher Funktion und Wirkungsweise sind in den Figuren 1 mit 7 jeweils mit denselben Bezugszeichen versehen.

Figur 1 zeigt schematisch in räumlicher Darstellung beispielhaft ein erstes Funkkommunikationsgerät MP. Von dessen Komponenten sind der zeichnerischen Einfachheit halber lediglich solche dargestellt, die primär Auswirkungen auf den SAR-Effekt (Specific Absorption Rate) des Funkkommunikationsgeräts MP haben. Im Einzelnen ist dies eine Leiterplatine bzw. Leiterplatte LP sowie eine an diese angekoppelte Funkantenne AT1, die zusammen betrachtet eine elektromagnetische Koppelstruktur zum Senden und/oder Empfangen von Funkstrahlungsfeldern bilden. Beide Komponenten sind zusammen im Inneren eines Gehäuses GH der Dicke H untergebracht, dessen Außenkonturen in der Figur 1 lediglich strichpunktiert angedeutet sind, um einen Blick ins Innere des Funkkommunikationsgeräts MP freizugeben. Auf der Leiterplatte LP sind die üblichen elektrischen Baugruppen zum Senden und/oder Empfangen von Funksignalen wie z.B. eine Hochfrequenzbaugruppe, eine Energieversorgungseinheit (wie z.B. eine Batterie oder ein Akkumulator) sowie ein oder mehrere weitere elektrische Baugruppen zur Steuerung der Ein- und/oder Ausgabeelemente des Funkkommunikationsgeräts (wie z.B. dessen Tastatur, Display, Lautsprecher, usw.) und zur Signalverarbeitung der mittels der Hochfrequenzbaugruppe empfangenen und/oder über diese abzusendenden Funksignale untergebracht. Diese elektrischen Baugruppen sind in der Figur 1 der Übersichtlichkeit halber weggelassen worden. Lediglich ein Teil einer Hochfrequenzbaugruppe HB1 ist im Bereich der oberen Stirnseite SRO der Leiterplatte LP mit eingezeichnet. Diese Hochfrequenzbaugruppe HB1 ist in einem Teilbereich der oberen Hälfte der Leiterplatte LP vorgesehen. An sie ist über einen mechanischen und elektrischen Kontakt COA die Sende-/Empfangsantenne AT1 zur Abstrahlung und/oder zum Empfang elektromagnetischer Funkwellen angeschlossen. Sie erhält von dort aus elektrische Energie einer Energieversorgungseinheit, die hier in der Figur 1 der Übersichtlichkeit halber ebenfalls weggelassen worden ist. Die Antenne AT1 ist zweckmäßigerweise auf derjenigen Bestückungsfläche der Leiterplatte LP angeordnet, die beim Tragen des Funkkommunikationsgeräts am Körper und/oder beim Einbringen des Funkkommunikationsgeräts zum Sprechen und/oder Hören in den Kopfbereich des jeweiligen Benutzers von diesem abgewandt ist. Hier im Ausführungsbeispiel von Figur 1 ist die Antenne AT1 auf der Rückseite der Leiterplatte LP angeordnet, wobei die Vorderseite des Funkkommunikationsgeräts derjenigen Außenmantelfläche de Gehäuses zugeordnet ist, die eine Anzeigevorrichtung, insbesondere ein Display, für den Benutzer aufweist.

Die Antenne AT1 ist vorzugsweise als Planar- bzw. Flachantenne ausgebildet. Für sie kann insbesondere eine sogenannte PIFA-Antenne (Planar Inverted F-Antenne) verwendet sein. Selbstverständlich kann es auch zweckmäßig sein, sonstige übliche Funkantennen, wie z.B. nach außen, aus dem Gehäuse GH abstehende Stummelantennen, an der Leiterplatte LP anzubringen.

Die Antenne AT1 ist im Ausführungsbeispiel von Figur 1 annäherungsweise rechteckförmig ausgebildet. Sie ist mit Hilfe der Kontaktierung COA ausgehend vom oberen Seitenrand SRO der Leiterplatte LP in einen Raumbereich hinein positioniert, der von den vier Seitenrändern SRL, SRR, SRO, SRU der Leiterplatte entlang der Flächennormalen deren Bestückungsfläche eingeschlossen wird. Die gedachte orthogonale Projektion der Antenne AT1 auf die Bauelementbestückungsfläche der Leiterplatte LP liegt also im wesentlichen innerhalb der durch die Seitenränder SRL, SRR, SRO, SRU der Leiterplatine LP aufgespannten Begrenzungsfläche. Mit anderen Worten ausgedrückt heißt das, dass die Antenne AT1 nicht über die vier Seitenränder der Bauelementbestückungsfläche der Leiterplatte LP hinaus verlängernd absteht. Somit ist die Leiterplatinenoberfläche durch die angekoppelte Antenne AT1 weder verlängert noch verbreitert. Die Antenne AT1 liegt also wie eine weitere Schicht über und/oder unter der Lageebene der Leiterplatine LP innerhalb des von deren vier Seitenrändern begrenzten Raumbereichs. Durch diese Antennenanordnung lassen sich in vorteilhafter Weise kompakte Geräteabmessungen realisieren.

Die Leiterplatte LP von Figur 1 weist räumlich betrachtet im wesentlichen eine flach rechteckförmige Quaderform auf, d.h. ihre vier Seitenränder SRL, SRR, SRO, SRU bilden zusammengesetzt die Außenkontur eines Rechtecks. Die Abmessungen der Leiterplatte LP, d.h. deren Länge L und deren Breite B, sind vorzugsweise derart dimensioniert, dass die Längserstreckung L der Leiterplatte LP größer als deren Breite B ist. Ihre räumlich geometrischen Verhältnisse sind in der Figur 1 dadurch veranschaulicht, dass dort zusätzlich die Koordinaten X, Y und Z eines kartesischen Koordinatensystems mit eingezeichnet sind. Dabei erstreckt sich die X-Koordinate entlang den Längsseiten SRL, SRR der Leiterplatte LP, während die Y-Richtung parallel zu den Breitseiten SRO, SRU der Leiterplatte LP verläuft. Die Bauelementbestückungsfläche der Leiterplatte LP liegt somit im wesentlichen in der X,Y-Ebene. Die Z-Richtung ist dabei der Höhe bzw. Dicke D der Leiterplatte LP mit ihren verschiedenen Komponenten wie z.B. der Hochfrequenzbaugruppe HB1 sowie sonstigen Auswerte-/Steuerbaugruppen zugeordnet.

Die Rechtecksform der Leiterplatte eignet sich vorzugsweise zum Einbau in ein flaches, im wesentlichen quaderförmiges Gehäuse wie z.B. GH von Figur 1. Die Leiterplatte LP ist hier im Ausführungsbeispiel von Figur 1 bezüglich ihrer Abmessungen, d.h. Länge L und Breite B sowie Dicke D, derart dimensioniert, dass sie sich zusammen mit den an ihr angekoppelten Bauteilen wie z.B. Antenne sowie den auf ihr angebrachten Baugruppen weitgehend passgenau im Gehäuse GH unterbringen lässt. In der Praxis werden die Abmessungen der Leiterplatte, d.h. deren Länge, Breite sowie Dicke, im wesentlichen durch die jeweilig gewünschte Geometrieform des Gehäuses begrenzt. Je nach Designform des Gehäuses sind die Außenkonturen der Leiterplatte zweckmäßigerweise an die Abmessungen und Geometrieform dieses Gehäuses angepasst gewählt. Die Leiterplatte kann somit auch kreisrunde, ovale oder sonstige Geometrieformen aufweisen.

Bei einer solchen Koppelstruktur aus mindestens einer Leiterplatte und mindestens einer daran angeschlossenen Funkantenne kommt es im Funkbetrieb, d.h. beim Abstrahlen und/oder Empfangen von elektromagnetischen Funkstrahlungsfeldern, zu einem Stromfluss auf der Leiterplatte. Denn die jeweilige Leiterplatte, wie z.B. LP, wirkt bezogen auf den Stromspeisungspunkt, wie z.B. COA, ihrer stirnseitig angekoppelten Antenne, wie z.B. AT1, in erster Näherung als eine Art ergänzender zweiter Antennenzweig zur eigentlichen Funkantenne, wie z.B. AT1, so dass insgesamt durch die Leiterplatine und der daran angekoppelten Antenne ein strahlungsdipol gebildet ist. Die jeweilige Leiterplatte, wie z.B. LP, ist dabei aufgrund ihrer elektrischen Baugruppen, deren elektromagnetische Abschirmgehäuse, Verbindungsleiterbahnen zwischen den elektronischen Komponenten der Baugruppen sowie sonstigen elektronischen Bestückungselementen stromleitfähig.

Insbesondere wenn die Sende- und/oder Empfangsantenne AT1 des Funkkommunikationsgeräts MP von Figur 1 als λ/4-Antenne ausgebildet ist, bildet diese zusammen mit der Leiterplatine LP einen Strahlungsdipol. Ist die Funkantenne AT1 auf Senden und/oder Empfangen geschaltet, so wird ein Stromfluss I1 auf der Leiterplatine LP mit einer Hauptvorzugsrichtung entlang deren Längserstreckung L hervorgerufen. In der Figur 1 ist dieser gerichtete Stromfluss I1 auf der Leiterplatte LP durch einen Pfeil in X-Richtung charakterisiert. Er repräsentiert dabei den Summenstrom I1(X) an jeder Längsortposition X der Leiterplatte LP, der daraus resultiert, dass an jeder Längsortposition X die Teilströme mit Hauptvorzugsrichtung in X-Richtung über die Gesamtquerschnittsbreite B, d.h. in Y-Richtung, fiktiv aufsummiert bzw. aufintegriert worden sind. Diese längsortsabhängige Verteilung des Summenstroms I1(X) ist für die Leiterplatine LP von Figur 1 in der Figur 7 schematisch anhand eines Stromdiagramms dargestellt.

In der Figur 7 ist entlang der Abszisse die X-Richtung aufgetragen, während der Ordinaten der über die Gesamtquerschnittsbreite B der Leiterplatte LP aufsummierte Summenstrom I1(X) für unterschiedliche Längsortpositionen X entlang der Längserstreckung der Leiterplatte LP zugeordnet ist. Mit der örtlichen Verteilung dieses Summenstromflusses stehen zum einen H-und/oder E-Felder, d.h. magnetische und/oder elektrische Felder, korrespondierend in Wechselbeziehung, die beim Tragen des Funkkommunikationsgeräts am Körper eines Benutzers, insbesondere beim Einbringen des jeweiligen Funkkommunikationsgeräts zum Sprechen und/oder Hören in den Kopfbereich des jeweiligen Benutzers eine entsprechende thermische Erwärmung des dortigen organischen Gewebes je nach der örtlichen Verteilung von Maxima und Minima bewirken können. Zum anderen scheint eine weitere Wechselwirkung zwischen dem elektrischen Stromfluss I1(X) mit einer Hauptvorzugsrichtung in X-Richtung auf der Leiterplatte LP und magnetischen und/oder elektrischen Feldstärkefeldern gegeben zu sein, die lokal im Nahbereich der Antenne AT1 bei deren Funkbetrieb entstehen.

Bei der Untersuchung des SAR-Effekts haben umfangreiche Tests mit einer H-Feld- und/oder E-Feld-Messsonde in einem Modellkopf, der mit einer Glukoselösung gefüllt und an den ein Funkkommunikationsgerät mit einer herkömmlichen, konventionellen Leiterplatte entsprechend LP von Figur 1 angelegt war, gezeigt, dass die thermische Erwärmung der Glukoselösung im Modellkopf örtlich schwankt bzw. variiert, d.h. eine örtliche, dreidimensionale SAR-Verteilung mit Maxima und Minima vorliegt. Dieses örtlich variierende, dreidimensionale SAR-Feld korrespondiert in erster Näherung zu einer entsprechend örtlich unterschiedlichen Verteilung des Summenstroms I1(X) auf der Leiterplatte LP.

In der Figur 7 ist der Ursprung UR der X-Achse dem oberen Seitenrand SRO, d.h. der oberen Stirnseite, der Leiterplatte LP von Figur 1 zugeordnet, während der untere Seitenrand SRU mit dem Längserstreckungsort X = L korrespondiert. Im Bereich der elektrischen Kontaktierungsstelle COA zwischen der Antenne AT1 und der Leiterplatte LP an der Längsstelle X = 0 cm fließt der Antenne AT1 der Speisungs- bzw. Fußpunktstrom FS ≠ 0 A zu. Bei bevorzugter Verwendung einer λ/4-Antenne kommt in etwa dieser Speisungsstrom oder zumindest ein Anteil davon auch an der Längsstelle X = 0 cm an der oberen Stirnseite der Leiterplatte LP zum Fließen, da die Leiterplatte LP als Antennenergänzungszweig zur λ/4-Antenne wirkt. An der unteren, der Antenne AT1 gegenüberliegenden Stirnseite SRU der Leiterplatte LP ist der Stromfluss in Längsrichtung aufgrund des freien Endes und damit durch die dortige Randbegrenzung unterbrochen, so dass an der der Antenne AT1 gegenüberliegenden Stirnseite SRU weitgehend I(X=L) = 0 A gilt.

Der weitere Verlauf der Summenstromverteilung I1(X) zwischen der oberen Stirnseite SRO und der unteren Stirnseite SRU der Leiterplatte LP wird durch eine Vielzahl von elektromagnetischen Ausbreitungs-/Koppelfaktoren beeinflusst. Dazu zählen vorzugsweise die Geometrieform sowie die räumlichen Abmessungen der Leiterplatte LP. Insbesondere deren Länge L hat bei der jeweilig verwendeten Funkfrequenz Auswirkungen auf die sich entlang der Leiterplatte ausbreitenden elektromagnetischen Wellen in Form von E- und/oder H-Feldern und somit auf die daraus resultierende Summenstromverteilung I1(X). Im Fall, dass eine λ/4-Antenne verwendet ist und die Länge L der Leiterplatine im wesentlichen λ/4 gewählt ist, bildet die Leiterplatte LP zusammen mit der λ/4-Antenne einen resonanten Strahlungsdipol. Die Leiterplatte wirkt dabei in erster Näherung als eine Art ergänzende λ/4-Antenne zur Antenne AT1. Auf diese Weise können sich auf dem Gesamtgebilde der Leiterplatte LP und der daran angekoppelten λ/4-Antenne stehende Wellen des Summenstromes I1(X) mit Stromknoten und Strombäuchen ausbilden.

Auch bei anderen Koppelverhältnissen der aus Leiterplatte und Antenne gebildeten Koppelstruktur stellt sich in der Praxis eine örtliche Verteilung des Summenstroms I1(X) ein, die in X-Richtung, d.h. entlang der Längserstreckung der Leiterplatte LP, nicht konstant ist, sondern schwankt. Ein maßgeblicher Einflussfaktor auf die örtliche Verteilung des Summenstroms I1(X) ist bei Verwendung einer rechteckförmigen Leiterplatte insbesondere deren Länge im Verhältnis zur elektrisch wirksam werdenden Antennenlänge bei der verwendeten Wellenlänge zum Abstrahlen und/oder Empfangen von elektromagnetischen Funkstrahlungsfeldern im Funkbetrieb.

Im Nahbereich dieser örtlichen Summenstromverteilung I1(X) wird ein entsprechendes, korrespondierendes, elektromagnetisches Feld erzeugt bzw. induziert, das beim bestimmungsgemäßen Gebrauch des Funkkommunikationsgeräts MP im organischen Körpergewebe eines Benutzers eine Erwärmung hervorrufen kann und für die ortsabhängige SAR-Verteilung in erster Linie verantwortlich ist. Unter bestimmungsgemäßem Gebrauch wird dabei zum einen verstanden, dass das jeweilige Funkkommunikationsgerät an einer Stelle am Körper eines Benutzers gehalten oder getragen wird. So kann das Funkkommunikationsgerät beispielsweise am Gürtel angebracht, an einem Gurt um den Hals des Benutzers gehängt, oder in der Brusttasche einer Jacke getragen werden, und dabei auf Empfang und/oder Sendebetrieb eingestellt sein. In der Praxis nutzt der jeweilige Benutzer oftmals auch ein sogenanntes Headset, d.h. er kommuniziert mit dem Funkkommunikationsgerät über ein Kabel mit angeschlossenem Mikro-Ohrhörer und Mikrofon. Zum anderen wird das jeweilige schnurlose, mobile Funkkommunikationsgerät üblicherweise in eine Benutzungsposition im Kopfbereich des jeweiligen Benutzers zum Sprechen und/oder Hören eingebracht und dort zwischen Ohr und Mund an die Backe des Benutzers angelegt. Der im Nahbereich des jeweiligen Funkkommunikationsgeräts wirksam werdende SAR-Effekt ist dabei insbesondere derjenige Ortsbereich, der unterhalb des Abstandes 2D²/λ liegt (λ ist die Wellenlänge; D ist die Gerätelänge).

Beispielsweise arbeitet ein GSM-Funknetz (Global System for Mobile Communications) in einem Freqenzbereich zwischen 880 und 960 MHz (Mittenfrequenz 900 MHz), was einer Betriebswellenlänge λ von ungefähr 35 cm entspricht. Dadurch ist bei einem GSM-Funksystem durch die örtliche Stromverteilung auf der Leiterplatine mit einer Eindringtiefe des elektromagnetischen Nahfeldes von ungefähr 1,7 cm zu rechnen. Im PCN-Netz (Private Commercial Network) (E-Netz) mit einem Frequenzband zwischen 1710 und 1880 MHz liegt die Wellenlänge ungefähr bei 17 cm, so dass das sich aufgrund der örtlichen Stromverteilung der Leiterplatine ergebende elektromagnetische Nahfeld eine Eindringtiefe von ungefähr 1,0 cm aufweist. In einem UMTS-Funkkommunikationssystem mit einem Frequenzübertragungsbereich zwischen 1920 und 2170 MHz beträgt die Wellenlänge λ ungefähr 15 cm, so dass die Eindringtiefe des elektromagnetischen Nahfeldes aufgrund der örtlichen Summenstromverteilung auf der Hauptplatine ungefähr 0,8 bis 1 cm erreicht. Je geringer dabei die örtliche Eindringtiefe in das Gewebe eines Benutzers ist, desto höher kann bei gleicher angenommener Sendeleistung der Antenne der gemessene SAR-Wert werden. Denn pro vorgegebenem Gewebsvolumen wird ja eine höhere elektromagnetische Felddichte, damit ein größerer zum Fließen kommender Strom und somit eine höhere Feldkonzentration hervorgerufen.

Um nun den SAR-Wert des jeweiligen Funkkommunikationsgeräts in kontrollierter Weise reduziert einstellen zu können, ist mindestens ein erstes zusätzliches, stromleitfähiges Korrekturelement zur SAR-Wert-Reduzierung an die Leiterplatte dieses Funkkommunikationsgeräts angekoppelt. Es ist dabei derart an die Leiterplatte angekoppelt und derart ausgebildet, dass die Amplitudenhöhe und/oder Phasenlage von elektrischen Strömen auf der Antenne, der Leiterplatte und dem Korrekturelement zueinander so eingestellt sind, dass das Maximum der sich insgesamt aufgrund dieser Ströme resultierenden SAR-Verteilung im Körpergewebe eines Benutzers beim bestimmungsgemäßen Gebrauch des Funkkommunikationsgeräts minimal wird. Mit anderen Worten heißt das, dass die Ströme auf der Antenne, der Leiterplatte und dem Korrekturelement gezielt derart aufeinander abgestimmt werden, dass der Betrag des sich ursprünglich einstellenden, absoluten Maximums (oder der etwaigen Maxima) in der örtlichen SAR-Feldverteilung der aufgrund dieser Ströme wirksam werdenden elektromagnetischen Felder am kleinsten wird. Dadurch sind unzulässig hochdosierte "Hot Spots", d.h. lokale Gewebsvolumenbereiche höherer thermischer Belastung gegenüber Gewebsvolumenbereiche geringerer Erwärmung, beim bestimmungsgemäßen Gebrauch des Funkkommunikationsgeräts weitgehend vermieden. Denn durch das Absenken der SAR-Wert- Spitzenwerte wird eine Art Homogenisierung der resultierenden SAR-Verteilung erreicht, die aufgrund der elektrischen Ströme auf der Antenne, der Leiterplatte und dem Korrekturelement resultiert.

Verschiedene Arten von ersten Korrekturelementen sind detailliert in der älteren Patentanmeldung mit dem Anmeldeaktenzeichen DE 101 10 982.2 angegeben.

In der Figur 1 ist ein erstes, stromleitfähiges Korrekturelement über der vorderen Bestückungsfläche der Leiterplatte LP eingezeichnet. Es ist mit dem Bezugszeichen CE1 versehen. Es ist mit Höhenabstand HA zur Leiterplatte LP sowie im wesentlichen parallel zu deren Bestückungsfläche angeordnet. Das zusätzliche Korrekturelement CE1 ist dabei vorzugsweise derjenigen Bestückungsfläche der Leiterplatte LP zugeordnet, die beim Tragen des Funkkommunikationsgeräts am Körper und/oder beim Einbringen des Funkkommunikationsgeräts zum Sprechen und/oder Hören in den Kopfbereich des jeweiligen Benutzers diesem zugewandt ist, um den SAR-Effekt in Richtung auf den jeweiligen Benutzer möglichst zu reduzieren. Dabei ist es zweckmäßig, wie hier im Ausführungsbeispiel von Figur 1 die Antenne AT1 auf der dem Korrekturelement CE1 gegenüberliegenden Bestückungsseite der Leiterplatte LP (Rückseite in der Figur 1) anzuordnen.

Die Geometrieform des ersten Korrekturelements CE1 von Figur 1 folgt im wesentlichen der rechteckförmigen Außenkontur der Leiterplatte LP nach. Das Korrekturelement ist also als rechteckförmiger Ring oder Rahmen ausgebildet und bildet in der X,Y-Ebene betrachtet eine Art rundum geschlossene Schleife, die sich im wesentlichen lediglich entlang den Seitenrändern SRL, SRO, SRR, SRU der Leiterplatte LP erstreckt, aber orthogonal (d.h. in Z-Richtung) bezüglich ihrer in der X,Y-Ebene fiktiv eingeschlossenen Innenfläche offen bzw. frei durchgängig ist. Dabei ist das Korrekturelement CE1 relativ zur Leiterplatte LP derart positioniert, dass die Außenberandung seiner Teilabschnitte im wesentlichen kongruent zur Außenkontur der rechteckförmigen Leiterplatte als eine weitere Schicht liegt. Das schleifenförmige Korrekturelement CE1 bildet von seiner Grund-Geometrieform her eine rechteckförmige Ringform bzw. Rahmenform passend zur rechteckförmigen Geometrieform der Leiterplatte LP. Es kann beispielsweise durch ein oder mehrere Drähte, eine ein- oder mehrlagige streifenförmige Folie oder durch ein sonstiges linienartiges oder flächiges Element gebildet sein. Ein solches Element kann z.B. auch eine Metallisierung sein, die durch Aufdampfen oder Galvanisieren an die Innenfläche des Gehäuses angebracht worden ist. Für das jeweilige Korrekturelement wie z.B. CE1 ist vorzugsweise ein elektrisch leitfähiges Material, ggf. auch ein dielektrisches und/oder magnetisch leitfähiges Material verwendet. Im vorliegenden Ausführungsbeispiel von Figur 1 weist das Korrekturelement CE1 im einzelnen im Bereich entlang der beiden Längsränder SRL, SRR der Leiterplatte LP linienförmige Teilabschnitte und im Bereich der oberen und unteren Stirnseiten der Leiterplatte LP rechteckförmige Streifenabschnitte auf.

Allgemein ausgedrückt ist es zweckmäßig, das zusätzliche Korrekturelement derart zu positionieren, dass seine gedachte orthogonale Projektion bezüglich der Bauelementbestückungsfläche der Leiterplatte im wesentlichen innerhalb einer durch deren Seitenränder aufgespannten Begrenzungsfläche liegt. Dadurch kommt das zusätzliche Korrekturelement in einer zweiten Schichtebene zur ersten Schichtebene der Leiterplatte LP zu liegen, wodurch ein kompakter Aufbau des Funkkommunikationsgeräts erreicht wird. Die ursprünglichen Längs- und Breitenabmessungen der Leiterplatte LP bleiben somit weitgehend erhalten.

Das erste Korrekturelement CE1 ist im Bereich der oberen Stirnseite SRO der Leiterplatte LP an die Masse der Leiterplatte LP galvanisch angeschlossen, was durch ein Erdungssymbol ERD angedeutet ist. Alternativ dazu kann es auch zweckmäßig sein, das erste Korrekturelement CE1 an die Leiterplatte LP kapazitiv oder induktiv anzukoppeln, d.h. die galvanische Verbindung ERD wegzulassen. Ggf. kann auch eine Kombination von galvanischer, kapazitiver und /oder induktiver Ankopllung zweckmäßig sein. Durch die hier im Ausführungsbeispiel elektrische Ankopplung des Korrekturelements CE1 an die Leiterplatte LP kommt in der Schleifenstruktur des Korrekturelements CE1 ein elektrischer Strom I2(X) zu fließen.

Im vorliegenden Ausführungsbeispiel sind die geometrischen Verhältnisse der Leiterplatine LP in Form eines langgestreckten Rechtecks so gewählt, dass die größte Stromamplitude bzw. Stromdichte des Summenstroms I1(X) ohne der Verwendung des Korrekturelements CE1 beispielsweise etwa im Zentrum der Leiterplatine LP, d.h. also im Bereich des Schnittpunkts deren Flächendiagonalen, liegt, während die Stromdichte zu den beiden Stirn-bzw. Breitseiten SRO, SRU hin abnimmt. In der Figur 7 ist das absolute Maximum des Summenstroms I1(X) auf der Leiterplatine am Längsort XM1 mit IM1 bezeichnet. Da nun das zusätzliche Korrekturelement stromleitfähige Bahnen dort aufweist, wo die örtliche Stromverteilung des Summenstroms I1(X) der Leiterplatine LP kleiner als IM1 ist, kann dort der Gesamtstrompegel angehoben werden und somit insgesamt betrachtet eine Vergleichmäßigung des insgesamt resultierenden Gesamtstromfeldes erreicht werden (=Kompensationseffekt).

Aufgrund der vielfältigen elektromagnetischen Koppelmechanismen, wie z.B. unterschiedliche Geometrieformen und/oder Abmessungen von Leiterplatine, Antenne, und/oder erstem Korrekturelement, kann es in der Praxis kritisch sein, bereits allein mit dem ersten Korrekturelement die Phasenlage und/oder die Amplitudenhöhe der elektrischen Ströme auf der Antenne, der Leiterplatte, und dem Korrekturelement zueinander so einzustellen, dass die sich ergebende, resultierende SAR-Verteilung zufriedenstellend reduziert ist.

Um eine verbesserte Einwirkungsmöglichkeit auf den resultierenden, überlagerten, für den SAR-Effekt wirksamen Gesamtstromfluss auf der Leiterplatte, dem Korrekturelement, und der Antenne bereitstellen zu können, ist es zweckmäßig, zusätzliche Abstimm-Mittel zum Abstimmen bzw. Tunen der Phasenlage und/oder der Amplitudenhöhe des elektrischen Stroms auf dem ersten Korrekturelement und/oder der Leiterplatte vorzusehen.

In der Figur 1 steht mit dem ersten Korrekturelement CE1 ein zweites, stromleitfähiges Korrekturelement TE1 als Abstimm- bzw. Tuning- Mittel zur Abstimmung des Stromflusses auf dem ersten Korrekturelement in Wirkverbindung. Es ist integraler Bestandteil des ersten Korrekturelements, da es in Form einer mäanderförmigen Schleifenstruktur in die rechteckförmige, im Inneren offene Grundschleife des ersten Korrekturelements CE1 eingefügt und somit mit diesem galvanisch verbunden ist. Durch die zusätzlichen Mäanderschleifen des zweiten Korrekturelements lässt sich der Stromlaufweg in der miteinander verkoppelten Gesamtstruktur von erstem und zweitem Korrekturelement in vorteilhafter Weise derart verändern, dass dort ein elektrischer Stromfluss I2(X) bewirkt ist, der weitgehend gegenphasig zum Stromfluss I1(X) auf der Leiterplatte LP verläuft. Hier im Ausführungsbeispiel von Figur 1 ist der Gesamtstromlaufweg der Gesamtstruktur aus erstem und zweitem Korrekturelement gegenüber einer rein rechteckförmigen Grundschleife durch den Einbau der Mäander des zweiten Korrekturelements verlängert.

In der Figur 7 ist im Summenstromdiagramm I(X) der örtliche Verlauf eines Summenstroms I2*(X) mit eingezeichnet, der insgesamt auf dem ersten Korrekturelement CE1 ohne die Ankopplung des zweiten Korrekturelements TE1 zum Fließen kommen könnte. In erster Näherung verläuft dieser Summenstrom I2*(X) gleichphasig zum Summenstrom I1(X) auf der Leiterplatine LP. Er weist an der Längsortstelle XM2* ein Strompegelmaximum auf, das unterhalb der Strompegelverteilung des Summenstroms I1(X) liegt und gegenüber der Längsortstelle XM1 des Strompegelmaximums IM1 des Summenstroms I1(X) längsortversetzt ist. Durch Überlagerung dieser beiden elektrischen Summenstromverläufe ergibt sich ein Gesamtstromverlauf RSV*(X), der oberhalb des ursprünglichen Summenstromverlaufs I1(X) der Leiterplatine LP liegt. Mit anderen Worten heißt das, dass die Superposition der Summenstromverläufe I1(X), I2*(X) ohne das zweite zusätzliche Korrekturelement als Abstimm-Mittel zur Ausbildung eines betragsmäßig noch größeren lokalen Strompegelmaximums führen würde, so dass in unerwünschter Weise ein erhöhter SAR-Effekt resultieren würde.

Erst mit Hilfe des zweiten, stromleitfähigen Korrekturelements TE1 kann aufgrund dessen zusätzlichen Mäanderschleifen die Stromlauflänge bzw. Strompfadlänge des ersten Korrekturelements CE1 derart verbessert eingestellt werden, dass auf dem Gesamtgebilde der beiden, durchgängig miteinander verbundenen Korrekturelemente CE1, TE1 ein gegenphasiger Stromfluss I2(X) zum Stromfluss I1(X) bewirkt ist. Dieser gegenphasige Stromfluss I2(X) ist in der Figur 7 im vierten Quadranten mit negativen Strompegelwerten I(X) zusätzlich zu den positiven Stromwerten I(X) des Summenstroms I1(X) im ersten Quadranten eingezeichnet. Der gegenphasige Gesamtstrom I2(X) auf den beiden miteinander verbundenen Korrekturelementen CE1, TE1 verläuft also in Gegenrichtung zum Summenstrom I1(X) auf der Leiterplatte LP. Er weist in etwa dort ein Maximum NIM1 auf, wo auch der Summenstrom I1(X) der Leiterplatte LP ein absolutes Maximum IM1 hat. Aufgrund dieses gegenläufigen, komplementären Strompegelverlaufs I2(X) auf den beiden miteinander verkoppelten Korrekturelementen CE1, TE1 ergibt sich ein maximaler Kompensationseffekt für das Maximum des Summenstrompegels I1(X) der Leiterplatte LP. Insgesamt ergibt sich somit durch Superposition der örtlichen Verteilung des Summenstroms I1(X) der Leiterplatte LP und des korrigierenden Gesamtstroms I2(X) auf dem ersten und zweiten Korrekturelement ein überlagerter Gesamtstromfluss RSV(X), der nur noch ein gegenüber dem ursprünglichen Strompegelverlauf I1(X) reduziertes, abgeflachtes Strompegelmaximum IM1* aufweist. Die örtliche Verteilung des überlagerten Gesamtstromflusses RSV(X) ist somit weitgehend homogenisiert, d.h. sie verläuft in erster Näherung mit einem konstanten Pegel. Zumindest sind unzulässig hohe Strompegelspitzen weitgehend vermieden. Mit einem derart vergleichmäßigten, resultierenden Strompegelverlauf des Superpositionsstroms aus dem Summenstrom I1(X) der Leiterplatine LP und dem Korrekturstrom I2(X) des ersten und zweiten Korrekturelements CE1, TE1 geht ein in erster Näherung konstantes SAR-Feld über die Gesamtfläche L·B der Leiterplatte LP betrachtet einher. Figur 4 zeigt eine derart idealisierte, zweidimensionale SAR-Verteilung S(X,Y) über die Gesamtfläche L·B der Leiterplatte LP betrachtet. Räumlich betrachtet resultiert durch dieses zusätzliche Tuningelement für das erste SAR-Wert Korrekturelement eigentlich eine dreidimensionale SAR-Wertverteilung SAR (X,Y,Z) mit annäherungsweise homogenem elektromagnetischem Feldstärkeverlauf. Diese dreidimensionale SAR-Wertverteilung lässt sich einem vorgebbaren Volumenbereich VOL rings um das Gehäuse GH des jeweiligen Funkkommunikationsgeräts vorgeben, der in der Figur 1 ausschnittsweise durch Strichpunktierung angedeutet ist.

Durch eine entsprechende Einstellung der Anzahl und/oder der Länge der Mäander des zweiten Korrekturelements TE1 kann der insgesamt in den beiden Korrekturelementen CE1, TE1 zum Fließen kommende Korrekturstrom I2(X) auf unterschiedliche örtliche Verläufe des Summenstroms I1(X) der Leiterplatte LP abgestimmt bzw. angepasst werden. Insbesondere kann zum einen der Grad der Gegenphasigkeit des Korrekturstroms I2(X) als auch die Amplitudenhöhe des absoluten Maximums dieses Korrekturstroms I2(X) eingestellt werden. Durch die Einstellung der Phasenlage und/oder Amplitude des Korrekturstroms I2(X) kann insbesondere die Lage des Maximums IM1 des Summenstroms I1(X) der Leiterplatte LP verschoben werden, was in der Figur 7 durch einen Verschiebepfeil VV entlang der X-Richtung angedeutet ist. Die Verschiebung wird zweckmäßigerweise derart vorgenommen, dass sich die SAR-Verteilung möglichst homogenisiert. Eine solche Verschiebung des absoluten Maximums des Summenstroms auf der Leiterplatte in unkritischere Gerätebereiche, wie z.B. zur unteren Stirnseite SRU hin, kann ggf. auch bereits zu einer Verbesserung des gemessenen SAR-Werts führen.

Das zweite Korrekturelement TE1 ist in der Figur 1 bezüglich der in X-Richtung durch die Mitte der Breitseiten SRO, SRU verlaufenden Mittenlinie MI der Leiterplatte LP weitgehend achssymmetrisch in das erste Korrekturelement CE1 eingefügt, so dass sich insgesamt eine symmetrische Struktur bezüglich der Mittenlinie MI für die Gesamtkombination bzw. für das Gesamtgebilde aus erstem und zweitem Korrekturelement ergibt.

Gegebenenfalls kann auch eine Koppelstruktur von Leiterplatte, Antenne und/oder Korrekturelement zweckmäßig sein, bei der das Korrekturelement in seiner gedachten orthogonalen Projektion bezüglich der Leiterplattenfläche über deren Seitenbegrenzungen hinausragt.

Zweckmäßigerweise ist das jeweilige zweite Korrekturelement wie z.B. TE1 derart dimensioniert, dass die von ihm fiktiv eingeschlossene Bestückungsfläche der Leiterplatte höchstens dem 0,2 bis 0,5 -fachen des vom ersten Korrekturelement wie z.B. CE1 fiktiv eingefassten Teils der Leiterplattenfläche wie z.B. L · B entspricht.

In der Praxis ist es dabei ferner zweckmäßig, das erste und/oder zweite Korrekturelement im Höhenabstand zwischen 0,1 und 0,6 cm von der Bestückungsfläche der Leiterplatte entfernt anzuordnen.

Figur 2 zeigt schematisch in räumlicher Darstellung die Leiterplatte LP von Figur 1 mit einer angekoppelten Korrekturelementstruktur, die sich aus dem ersten Korrekturelement CE1 und einem gegenüber Figur 1 modifizierten zweiten Korrekturelement TE2 zusammensetzt. Dieses zweite Korrekturelement TE2 ist durch streifenförmige Stromleitelemente, sogenannte "Patches", gebildet. Diese streifenförmigen, flächigen Stromleitelemente TE2 verlaufen im wesentlichen orthogonal zur Längserstreckung L des ersten Korrekturelements CE1 in derselben Lageebene. Zum Abstimmen bzw. Tunen des Korrekturstroms I(X), der durch diese verkoppelte Struktur aus erstem und zweitem Korrekturelement CE1, TE2, fließt, können ein oder mehrere Streifenelemente vorgesehen sein. Die Anzahl dieser Streifenelemente, deren Querabstand in Längsrichtung voneinander, und deren Streifenflächenabmessungen werden in vorteilhafter Weise derart gewählt, dass der Korrekturstrom I2(X) im wesentlichen gegenphasig zum Summenstrom I1(X) der Leiterplatte LP verläuft. In der Figur 2 sind jeweils zwei, in einem vorgebbaren Längsabstand aufeinanderfolgende Streifenelemente (=Streifenelementpaar) achssymmetrisch bezüglich der Mittenlinie MI der Leiterplatte LP an das erste Korrekturelement CE1 angekoppelt, und zwar so, dass die Streifenelemente in das Innere der von den Seitenrändern der Leiterplatine LP umrahmten Fläche zeigen. Durch diese parallele Ankopplung der streifenförmigen Elemente des zweiten Korrekturelements TE2 an das erste Korrekturelement CE1 wird eine zusätzliche kapazitive Last bezogen auf die Leiterplatte LP bereitgestellt. Durch entsprechende Wahl der zusätzlichen kapazitiven Last lässt sich somit ebenfalls insgesamt ein überlagerter Gesamtstromfluss RSV(X) einstellen, der weitgehend vergleichmäßigt ist (siehe Figur 7). Figur 3 zeigt vereinfacht diese parallele Ankopplung einer zusätzlichen kapazitiven Last CAP2 durch das zweite Korrekturelement TE2 zusätzlich zur kapazitiven Last CAP1, die zwischen dem ersten Korrekturelement CE1 und der Leiterplatte LP gebildet ist.

In den Figuren 1 und 2 sind die Mäanderschleifen bzw. Streifenelemente des zweiten Korrekturelements TE1 bzw. TE2 jeweils in die rechteckförmige Grundschleife des ersten Korrekturelements CE1 hineinintegriert, d.h. galvanisch mit dem ersten Korrekturelement verbunden. Dabei können die beiden Korrekturelemente aus gleichartigen Formelementen oder aus zueinander unterschiedlichen Formelementen zusammengesetzt sein. In der Figur 2 sind beispielsweise die linienförmigen Längsseiten des ersten Korrekturelements CE1 mit den streifenförmigen Flächenelementen des zweiten Korrekturelements TE2 verbunden. Zusätzlich oder unabhängig hiervon kann es gegebenenfalls auch ausreichend sein, das erste und das zweite Korrekturelement kapazitiv oder induktiv miteinander zu verkoppeln.

Figur 5 zeigt schematisch in räumlicher Darstellung die Koppelstruktur zwischen der Leiterplatte LP und dem ersten Korrekturelement CE1 von Figur 1, wobei jetzt ein zweites Korrekturelement TE3 separat vom ersten Korrekturelement und separat von der Leiterplatte LP als Abstimm-Mittel vorgesehen ist. Dieses zweite Korrekturelement TE3 ist dabei beispielhaft durch ein ESD-Schutzelement (ESD = Electrostatic Discharge), insbesondere durch ein metallisches Display (Anzeige) - Fenster, gebildet. Der Ausschnitt für das Display des Funkkommunikationsgeräts MP ist in der Figur 5 mit LDP bezeichnet. Das zweite Korrekturelement TE3 ist im wesentlichen im Bereich der Mittenlinie MI in der oberen Hälfte der Leiterplatte LP derart positioniert, dass seine gedachte orthogonale Projektion bezogen auf die Bestückungsfläche der Leiterplatine LP in der X,Y-Ebene im Inneren der Umrahmungsfläche, die durch die Seitenränder der Leiterplatine eingefasst ist, zu liegen kommt. Dieses ESD-Schutzelement ist flächig ausgebildet und liegt in einer zur Bestückungsfläche der Leiterplatte LP parallelen Schichtebene in einem vorgegebenen Höhenabstand. Zweckmäßigerweise sind das erste Korrekturelement CE1 und das zweite Korrekturelement TE3 etwa in derselben Lageebene auf der selben Seite der Leiterplatine positioniert. Bevorzugt sind sie auf der Vorderseite des Funkkommunikationsgeräts angebracht, d.h. dort, wo dessen Display untergebracht ist, und nicht auf der Rückseite des Funkkommunikationsgeräts. Dadurch bleibt das Antennenvolumen der Antenne AT1 auf der Rückseite der Leiterplatine weitgehend von den Korrekturelementen auf der Vorderseite unbeeinflusst, so dass unzulässig große Abstrahlverluste der Antennennutzleistung weitgehend vermieden sind. Ggf. kann es auch zweckmäßig sein, dass zweite Korrekturelement TE3 in einer Lageebene anzuordnen, die von der Lageebene des ersten Korrekturelements CE1 verschieden ist, aber derselben Leiterplatinenseite angehört.

Das zweite Korrekturelement TE3 ist kapazitiv und/oder induktiv an das erste Korrekturelement CE1 und/oder an die Leiterplatte LP angekoppelt. Insbesondere durch Anpassung des Höhenabstands zur Bestückungsebene der Leiterplatte LP sowie der Geometrieform der stromleitfähigen ESD-Schutzelementfläche und/oder der Ausschnittsfläche des Displayfensters LTP des zweiten Korrekturelements TE3 lässt sich der Korrekturstrom I2(X) im ersten Korrekturelement CE1 zusammen mit dem Stromfluss I4 auf dem zweiten Korrekturelement TE3 derart tunen bzw. abstimmen, dass insgesamt ein überlagerter Gesamtstrom RSV(X) zusammengesetzt aus dem Korrekturstrom I2(X), dem Korrekturstrom I4, und dem Leiterplatinenstrom I1(X) resultiert, der über die Längserstreckung der Leiterplatine LP betrachtet weitgehend vergleichmäßigt bzw. homogenisiert ist. Zu diesem Zweck wird der Korrekturstrom I2(X) und ggf. der Korrekturstrom I4 mit Hilfe des zweiten Korrekturelements TE3 vorzugsweise derart abgestimmt, dass diese in Summe weitgehend gegenphasig zum Summenstrom I1(X) der Leiterplatte LP verlaufen (siehe Figur 7).

Gegebenenfalls kann es auch ausreichend sein, dass mit Hilfe des mindestens zweiten Korrekturelements der elektrische Strom im ersten Korrekturelement derart abgestimmt wird, dass dieser zwar nicht gegenphasig zum Leiterplatinenstrom I1(X) verläuft, aber an denjenigen Längsortstellen in X-Richtung betrachtet eine Anhebung des Gesamtstrompegels bewirkt, an denen der ursprüngliche Leiterplatinenstrompegel I1(X) kleiner als IM1 ist. Auch dadurch lässt sich in gewissem Umfang bereits eine Vergleichmäßigung des Gesamtstrompegels erreichen und somit eine Homogenisierung der SAR-Verteilung erzielen.

Um zu erreichen, dass in einem vorgebbaren Volumenbereich ringsum das jeweilige Funkkommunikationsgerät eine möglichst gleichmäßige SAR-Wertverteilung vorliegt, bei der lokale Maxima weitgehend vermieden sind, kann es ggf. auch zweckmäßig sein, ein Paar von entsprechenden Korrekturelementen auch auf der Rückseite der Leiterplatine vorzusehen, wo die Antenne angeordnet ist. Dies kann interessant sein, wenn sogenannte "body worm" Werte auch auf der Geräterückseite eingehalten werden müssen. Auf diese Weise können vorgegebene SAR-Werte auch beim Tragen des Funkkommunikationsgeräts an einem Gürtel im Bauchbereich eingehalten werden, wo dieses üblicherweise mit seiner Rückseite anliegt. Gleiches gilt beim Tragen an einer Halskette oder Brustgurt. Dabei kann unter Umständen auch eine räumliche Anordnung bzw. Konstellation der Korrekturelemente ausreichend sein, bei der das erste Korrekturelement der Vorderseite sowie dessen Tuningelement der Rückseite der Leiterplatine zugeordnet ist.

Figur 6 zeigt schematisch in räumlicher Darstellung die aus der Leiterplatte LP und der Antenne AT1 gebildete Koppelstruktur für das Funkkommunikationsgerät MP von der Rückseite, d.h. von der antennenseitigen Bestückungsfläche, her betrachtet. Im Unterschied zu Figur 1 ist jetzt ein erstes Korrekturelement CE4 durch eine in der X,Y - Ebene (Lageebene der Leiterplatte LP) offene Rechteckschleife gebildet, d.h. das erste Korrekturelement CE4 weist Streifenelemente lediglich im Randzonenbereich entlang der Ränder der Längsseiten SRL, SRR, sowie entlang dem oberen Seitenrand SRO der Leiterplatte LP auf, während der linienförmige Teilabschnitt des Korrekturelements CE1 von Figur 1 im Bereich des unteren Seitenrands SRU der Leiterplatte LP weggelassen worden ist. Das erste Korrekturelement CE4 weist somit im wesentlichen die Geometrieform eines rechteckförmigen U's auf, d.h. es ist U-profilförmig ausgebildet. Es ist auf derjenigen Bestückungsseite der Leiterplatine angeordnet, die der Antennenankopplung für die Antenne AT1 abgewandt ist. Seine drei verschiedenen, jeweils streifenförmigen Teilabschnitte liegen in etwa in derselben Lageebene parallel zur Bestückungsfläche der Leiterplatte LP sowie mit Höhenabstand HA zu dieser. Im Einzelnen erstreckt sich ein streifen- bzw. linienförmiges Seitenteil des ersten Korrekturelements CE4 entlang dem linken Seitenrand SRL, entsprechend dazu achssymmetrisch bezogen auf die Mittenlinie MI ein zweites, streifenförmiges Seitenteil entlang dem rechten Seitenrand der Leiterplatte LP, sowie ein dritter analog ausgebildeter Teilabschnitt entlang dem oberen Seitenrand SRO der Leiterplatte LP. Dieses erste Korrekturelement CE4 ist bezüglich seiner Außenkontur vorzugsweise im wesentlichen kongruent zu den beiden Längsseitenrändern SRL, SRR sowie zum oberen Seitenrand SRO der Leiterplatte LP in einer Schichtebene mit Höhenabstand HA positioniert.

Allgemein betrachtet ist es zweckmäßig, das erste Korrekturelement CE4 in einer zur Leiterplatte LP parallelen Schichtebene derart zu positionieren, dass seine gedachte orthogonale Projektion bezüglich der Bauelementbestückungsfläche der Leiterplatte LP im wesentlichen innerhalb einer durch deren Seitenränder SRL, SRR, SRO, SRU aufgespannten Begrenzungsfläche liegt. Beispielsweise kann das erste Korrekturelement CE4 bezüglich seiner Breite und Länge so verkürzt sein, dass es nur einen Teil der Zentralzone der Bestückungsfläche der Leiterplatte LP fiktiv umrahmt.

An das erste Korrekturelement CE4 von Figur 6 ist ein zweites Korrekturelement TE4 im Bereich des rechten Seitenrands SRR der Leiterplatte LP angekoppelt, das sich im wesentlichen quer, insbesondere in Y-Richtung, d.h. orthogonal, zur Längserstreckung der Leiterplatine LP als streifenförmiges Flächenelement erstreckt. Es ist galvanisch mit dem ersten Korrekturelement CE4 verbunden. Es dient als Einzelelement der Abstimmung des Korrekturstroms I2(X), der im ersten Korrekturelement CE4 mit dem daran angekoppelten zweiten Korrekturelement TE4 zum Fließen kommt, dahingehend, dass insgesamt ein überlagerter Gesamtstromfluss aus dem elektrischen Strom I1(X) auf der Leiterplatte LP, dem Korrekturstrom I2(X) auf der Korrekturelementstruktur CE4 und TE4, sowie dem elektrischen Strom I3 auf der Antenne AT1 weitgehend vergleichmäßigt bzw. homogenisiert ist, so dass unzulässig hohe absolute Maxima im Gesamtstrompegel weitgehend vermieden sind.

Zusätzlich oder unabhängig vom zweiten Korrekturelement TE4 kann es gegebenenfalls auch zweckmäßig sein, ein Korrekturelement zur Anpassung des Stroms I1(X) auf der Leiterplatte LP selbst zusätzlich zum ersten Korrekturelement CE4 vorzusehen. In der Figur 6 ist an der Leiterplatte LP ein drittes zusätzliches, stromleitfähiges Korrekturelement ZV6 als Abstimm-Mittel derart angekoppelt und ausgebildet, dass die Phasenlage und/oder die Amplitudenhöhe des elektrischen Summenstroms I1(X) auf der Leiterplatte LP ebenfalls abgestimmt bzw. getunt werden können. Ein solches Abstimm-Mittel für den Leiterplatinenstrom kann insbesondere durch eine virtuelle Masseverlängerung der Leiterplatte LP gebildet sein. Verschiedene Möglichkeiten von virtuellen Stromwegverlängerungen sind in der älteren, nicht vorveröffentlichten Patentanmeldung mit dem Anmeldeaktenzeichen DE 10204877.0 detailliert angegeben. In der Figur 6 ist ein Teilbereich der Massefläche der Leiterplatte selbst derart ausgestaltet, dass ein zusätzliches verlängerndes Element ZV6 zur virtuellen Masseverlängerung entsteht. Das Korrekturelement ZV6 ist dabei integraler Bestandteil der Massefläche der Leiterplatine LP mit ursprünglich rechteckförmiger Außenkontur. Dabei ist ein Teilbereich der Massefläche der Leiterplatine LP an der der Antenne AT1 gegenüberliegenden Stirnseite SRU derart getrennt von dieser in derselben Lageebene ausgeführt, dass er wie eine Verlängerung des Stromweges ausgehend vom Antennenspeisungspunkt COA in Richtung auf die untere Stirnseite SRU der Leiterplatte LP wirkt. Das Korrekturelement ZV6 weist eine Mäanderform durch seriell aufeinanderfolgende 90° Abknickungen bzw. rechteckförmige Zick-Zack-Biegungen von Stegabschnitten auf. Dieses mäanderförmige Korrekturelement ZV6 kann insbesondere durch Ausstanzen oder Herausschneiden aus der ursprünglich rechteckförmigen Leiterplatine LP von Figur 1 hergestellt sein. Das Korrekturelement ZV6 ist vorzugsweise in einem Eckbereich der unteren Platinenstirnseite SRU vornesehen, der schräg, insbesondere diagonal, versetzt zur Antennenankopplung im Eckbereich der oberen, gegenüberliegenden Stirnseite SRO angeordnet ist. Denn durch diesen weitgehend diagonalen Laufweg zwischen der Antenne AT1 und dem freien Ende FE des Korrekturelements ZV6 ist die größte mögliche virtuelle Wegverlängerung für den hinsichtlich des SAR-Effekts wirksamen Summenstroms auf der zur Verfügung stehenden Platinenfläche bei gleicher vorgegebener, rechteckförmiger Außenkontur bereitgestellt.

Allgemein ausgedrückt kann also durch Faltungen eines dritten Korrekturelements innerhalb der Leiterplatinenbestückungsfläche und/oder ggf. über die Leiterplatinenoberseite, und/oder Leiterplatinenunterseite der Stromweg auf der Leiterplatte selbst in kontrollierter Weise eingestellt werden. Durch eine Mäanderform, d.h. durch eine Formgebung des Korrekturelements, bei dem sich jeweils ein Teilabschnitt mit Erstreckung in Längsrichtung der Leiterplatte mit jeweils einem Abschnitt quer, insbesondere orthogonal, zur Längserstreckung der Leiterplatte abwechselt, und dabei jeweils zwei solche aufeinanderfolgende Teilabschnitte einen von 0 verschiedenen Winkel zwischen sich einschließen, lässt sich die Länge des Korrekturelements in X-Richtung relativ kurz halten. Denn durch die Zick-Zack-Form lässt sich für den elektrischen Strom gegenüber einem Korrekturelement mit geradliniger Streifenform mehr Lauflänge erzielen. Der maximal mögliche Stromweg auf der Leiterplatte LP von Figur 6 beginnt also im Bereich der Antenne AT1 und endet am freien Ende FE des Korrekturelements ZV6 nach Durchlaufen von dessen mäanderförmigen Windungen. Vorzugsweise ist dieses dritte Korrekturelement mit seinen ein oder mehreren Faltungen in einer oder mehreren Schichtebenen angebracht, die innerhalb der von den Seitenrändern der Leiterplatte begrenzten Bestückungsebene liegen. Dabei kann das Korrekturelement auch mit Höhenabstand zur Bestückungsfläche der Leiterplatte angeordnet sein. Auf diese Weise bleiben die ursprünglich vorgegebenen Abmessungen der Leiterplatte weitgehend erhalten, so dass sich für das Funkkommunikationsgerät eine kompakte, miniaturisierte Bauweise erreichen lässt.

Dadurch, dass an die Leiterplatte selbst galvanisch, kapazitiv und/oder induktiv mindestens ein Korrekturelement als Abstimm-Mittel des Leiterplatinenstroms angekoppelt ist, lässt sich ebenfalls die Amplitudenhöhe und/oder Phasenlage der elektrischen Ströme I3, I1, I2 auf der Antenne AT1, der Leiterplatte LP, sowie dem ersten Korrekturelement CE4 zueinander so einstellen, dass das jeweilige absolute Maximum der sich insgesamt aufgrund dieser Ströme I1, I2, I3 ergebenden SAR-Verteilung minimal wird.

Mit ein oder mehreren dieser verschiedenen Korrekturelemente entsprechend den Figuren 1 mit 7 ist es somit ermöglicht, den SAR-Wert eines Funkkommunikationsgeräts bereits in der Entwicklungsphase zielgerichtet zu beeinflussen und zu reduzieren und sowohl flächig in einer zur Vorder- und/oder Rückseite des Funkkommunikationsgeräts parallelen Meßebene, als auch dreidimensional in einem vorgebbaren Volumenbereich um das Gehäuse des jeweiligen Funkkommunikationsgeräts herum.

Umfangreiche Tests haben erfolgreich gezeigt, dass eine erste vorteilhafte Möglichkeit, den SAR-Wert zu reduzieren, darin besteht, eine oben auf der Leiterplatine bzw. PCB-Board (printed circuit board) kontaktierende stromleitfähige Korrekturschleife anzubringen, die teilweise oder ganz im wesentlichen entlang der Seitenränder der Leiterplatte verläuft. Bei dieser Variante kann der ursprünglich gegebene SAR-Wert gegenüber der Ausgangssituation ohne Korrekturelement um bis zu 75% reduziert werden.

Dieser Wert kann jedoch nicht mit beliebigen Korrekturschleifen erreicht werden, da in der Praxis eine Vielzahl von Einflußgrößen (wie z.B. vorgegebene Geometrieformen und Abmessungen von Antenne und Leiterplatte) in die SAR-Verteilung der Koppelstruktur von Leiterplatte und Antenne in unkontrollierbarer Weise mit eingehen können. Eine gezielte bzw. kontrollierte Minimierung des absoluten Maximums oder der Maxima der SAR-Verteilung durch eine einfache, einzelne Korrekturschleife kann also in der Praxis unter manchen Gegebenheiten erschwert sein. Eine Optimierung der SAR-Verteilung kann aber werkseitig mit Hilfe mindestens eines an dem ersten Korrekturelement und/oder an der Leiterplatte angekoppelten, zweiten Korrekturelements erreicht werden, das die Phasenlage und/oder Amplitudenhöhe der elektrischen Ströme auf der Antenne, der Leiterplatte und dem Korrekturelement zueinander so aufeinander abstimmt bzw. "tuned", dass das sich ergebende SAR-Feld im Körpergewebe möglichst vergleichmäßigt ist. Es ist also eine weitere, optimierte Reduzierung des SAR-Effekts bewirkt, wenn zum Abstimmen der Phasenlage und/oder Amplitude des elektrischen Stroms auf dem ersten Korrekturelement und/oder Leiterplatte zusätzliche Abstimm-Mittel derart vorgesehen sind, dass der insgesamt resultierende, überlagerte Gesamtstromfluss auf der Leiterplatte, dem Korrekturelement und der Antenne ein in erster Näherung homogenes SAR-Feld über die Gesamtfläche der Leiterplatte betrachtet bewirkt. Damit einhergehend ist auch ein homogenere SAR- Wertverteilung auf den übrigen Seiten (z.B. Oberseite, Unterseite, Rückseite) des Funkkommunikationsgeräts.

Zusammenfassend betrachtet lässt sich eine optimale SAR-Verteilung bereits durch eine entsprechende Einstellung der ersten Korrekturschleife erreichen. Hierzu sind im wesentlichen zwei Maßnahmen zweckmäßig. Eine erste zweckmäßige Möglichkeit ist, die Länge der Schleife zu modifizieren. Dies führt zu einer anderen Phasenlage des Stroms auf der Korrekturschleife. Zusätzlich oder unabhängig hiervon lässt sich durch Längenveränderung auch die Amplitude des Stromes auf der Korrekturschleife verändern. Auf diese Weise lässt sich die örtliche Verteilung des Korrekturstroms auf der Korrekturschleife derart in Längsrichtung der Leiterplatte verschieben, dass dort der Gesamtstrompegel angehoben wird, wo zuvor der ursprüngliche Leiterplattenstrom kleiner als das ursprünglich vorhandene Maximum war. Durch die räumliche Neuverteilung des ursprünglichen Leiterplattenstroms von dessen absoluten Maxima weg in diejenigen Bereiche, die zuvor einen geringeren Strompegel hatten, wird eine gewisse Vergleichmäßigung erreicht. Bei der Verwendung einer derartigen einfachen Korrekturschleife ist jedoch deren maximale Länge durch die Länge der Außen- bzw. Innenkante des Gehäuses des Funkkommunikationsgerätes und damit auch der mögliche Abstimmfaktor bzw. Tuningfaktor zum Vergleichmäßigen der Summenstromverteilung begrenzt.

Ist es notwendig, aufgrund der gegebenen Baugröße des Funkkommunikationsgeräts sowie sonst gegebenen, elektromagnetischen Koppelverhältnissen die Korrekturschleife zu verändern, insbesondere weiter zu verlängern, um eine weitere Optimierung des SAR-Wertes zu erreichen, ist es zweckmäßig, die Schleife in bestimmten Teilbereichen mäanderförmig zu gestalten, wie dies z.B. in der Figur 1 dargestellt ist. Eine zweite Möglichkeit zur Verlängerung der Korrekturschleife unter Beibehaltung der ursprünglichen Längs- und Querabmessungen der Koppelstruktur aus Leiterplatte und Antenne ist durch die parallele Ankopplung von mindestens einer sogenannten Patch-Struktur an das erste Korrekturelement gegeben. Dies ist in der Figur 2 veranschaulicht. Die dort dargestellten Patches innerhalb der Schleifenstruktur des ersten Korrekturelements können gegebenenfalls auch kapazitiv oder induktiv angebunden sein. Auch dieses führt zu einer geänderten Stromverteilung auf der Schleife aufgrund veränderter kapazitiver Lastverhältnisse und damit zu einem geänderten SAR-Wert. Diese Patch-Struktur kann auch eine zu anderen Zwecken eingesetzte metallische Struktur sein, wie z.B. ein ESD-Schutzelement, das mit dem erstgenannten Korrekturelement zusammenwirkt. Diese weitere Variante ist in der Figur 5 dargestellt.

Eine weitere Möglichkeit zur Verbesserung des SAR-Verhaltens ist durch die zusätzliche Veränderung der Ströme auf der Leiterplatte durch eine virtuelle Verlängerung der Leiterplatte gegeben. Auch so lässt sich eine optimale Phasen- und Amplitudenlage zwischen den Strömen auf der Leiterplatte, Korrekturelement und Antenne erreichen.

Allgemein ausgedrückt ist also eine gezielte Kombinierung verschiedener Maßnahmen vorteilhaft, die für sich teilweise bereits einen SAR-Wert- beeinflussenden Effekt zeigen, aber in ihrer Kombination zu einem signifikant besseren Ergebnis als einzeln führen. Dabei werden teilweise stark nicht lineare Superpositionseffekte der verschiedenen Maßnahmen zueinander gezielt ausgenutzt. In vorteilhafter Weise kann dazu insbesondere ein erstes Korrekturelement in gezielter Weise trotz beschränkter Gerätegröße durch mäanderförmige Ausführung mechanisch und elektrisch verlängert werden. Zum anderen kann eine weitere Verbesserung durch die gezielte, gleichzeitige Nutzung von zwei unterschiedlichen Maßnahmen, nämlich Korrekturschleife und zusätzliche Patch-Elemente erreicht werden, die für sich genommen zwar bereits eine Einzelwirkung haben, gemeinsam aber eine weitaus höhere Wirksamkeit als die Summe der Einzeleffekte zeigen, und zwar dadurch, dass zusätzliche Patches (siehe Figur 2) die Stromverteilung in der ersten Korrekturschleife optimieren. Eine weitere zweckmäßige Kombinationsmöglichkeit ist, zusätzlich oder unabhängig von der Beeinflussung der Ströme in der Schleife die Ströme auf der Leiterplatte selbst durch mindestens ein weiteres Korrekturelement, wie z.B. ZV6 in Figur 6, gezielt zu verändern. Dies kann insbesondere eine virtuelle Leiterplattenverlängerung sein. Auch so lässt sich eine optimale Amplituden- und Phasenlage erreichen. Messungen bei einem konkreten Entwicklungsmodell für ein Funkkommunikationsgerät haben für den SAR-Wert beispielsweise folgende reduzierte Werte (in Prozent) bezogen auf ein Funkkommunikationsgerät ohne Schleife und ohne metallisches Display-Fenster (100% = Ausgangssituation) ergeben:
- Gerät mit erster Korrekturschleife ohne metallisches Display-Fenster als Abstimmelement: 86% (bezogen auf die Ausgangssituation)
- Funkkommunikationsgerät ohne erste Korrekturschleife mit metallischem Display-Fenster als zusätzlichem Abstimmelement: 66%
- Funkkommunikationsgerät mit erster Korrekturschleife und metallischem Display-Fenster als zusätzlichem Abstimmelement entsprechend Figur 5: 56%
Insbesondere diese Konstellation ist für eine Vielzahl von praktischen Gegebenheiten ausreichend und wegen der einfachen Konstruktion und Handhabbarkeit vorteilhaft.

## Patentansprüche

1. Funkkommunikationsgerät (MP) mit reduziertem SAR-Wert mit mindestens einer Leiterplatte (LP) und mit mindestens einer daran angekoppelten Antenne (AT1) zum Abstrahlen und/oder Empfangen von elektromagnetischen Funkstrahlungsfeldern, wobei die Antenne (AT1) auf einer Rückseite der Leiterplatine (LP) angeordnet ist, die beim Tragen des Funkkommunikationsgeräts (MP) am Körper und/oder beim Einbringen des Funkkommunikationsgeräts (MP) zum Sprechen und/oder Hören in den Kopfbereich des jeweiligen Benutzers von diesem abgewandt ist,
**dadurch gekennzeichnet,**
**dass** mindestens ein erstes zusätzliches, stromleitfähiges Korrekturelement (CE1, CE4) zur SAR-Wertreduzierung auf einer der Antenne (AT1) gegenüberliegenden Vorderseite der Leiterplatte (LP) angekoppelt und ausgebildet ist und auf dem ersten Korrekturelement (CE1, CE4) und/oder der Leiterplatte (LP) zusätzliche Abstimm-Mittel zum Abstimmen der Phasenlage und/oder Amplitude eines elektrischen Stroms (I2) vorgesehen sind, wobei die Amplitudenhöhe und/oder Phasenlage von elektrischen Strömen (I3, I1, I2) auf der Antenne (AT1), der Leiterplatte (LP) und dem Korrekturelement (CE1, CE4) in einem resultierenden, überlagerten Gesamtstromfluss (RSV(X)) zueinander so eingestellt sind, dass das Maximum der sich insgesamt aufgrund dieser Ströme (I1, I2, I3) resultierenden SAR-Verteilung (S(X,Y)) im Körpergewebe eines Benutzers beim Tragen des Funkkommunikationsgeräts (MP) oder beim Einbringen des Funkkommunikationsgeräts (MP) zum Sprechen und/oder Hören in den Kopfbereich dieses Benutzers abgesenkt wird.

2. Funkkommunikationsgerät (MP) nach Anspruch 1,
**dadurch gekennzeichnet,**
**dass** der resultierende, überlagerte Gesamtstromfluss (RSV(X)) aus den elektrischen Strömen (I1, I2, I3) auf der Leiterplatte (LP), dem ersten Korrekturelement (CE1, CE4), und der Antenne (AT1) insgesamt eine weitgehend homogene SAR-Verteilung (S(X,Y,Z)) in einem vorgebbaren Flächenbereich (L · B) der dem Benutzer zugewandten Vorderseite der Leiterplatte (LP) betrachtet oder in einem vorgebbaren Volumenbereich (VOL) um die Koppelstruktur aus der Leiterplatte (LP) sowie der dort angekoppelten Antenne (AT1) herum bewirkt.

3. Funkkommunikationsgerät (MP) nach Anspruch 1 oder 2,
**dadurch gekennzeichnet,**
**dass** das erste Korrekturelement (CE1, CE4) mit der Masse (ERD) der Leiterplatte (LP) galvanisch verbunden ist.

4. Funkkommunikationsgerät (MP) nach Anspruch 1 oder 2,
**dadurch gekennzeichnet,**
**dass** das erste Korrekturelement (CE1, CE4) an die Leiterplatte (LP) kapazitiv oder induktiv angekoppelt ist.

5. Funkkommunikationsgerät (MP) nach einem der vorhergehenden Ansprüche,
**dadurch gekennzeichnet,**
**dass** das erste Korrekturelement (CE1, CE4) als eine Schleife ausgebildet ist, die sich teilweise oder ganz im wesentlichen entlang der Seitenränder (SRL, SRO, SRR, SRU) der Leiterplatte (LP) erstreckt.

6. Funkkommunikationsgerät (MP) nach Anspruch 5,
**dadurch gekennzeichnet,**
**dass** die Schleife für das erste Korrekturelement (CE1) im wesentlichen rechteckförmig ausgebildet ist.

7. Funkkommunikationsgerät (MP) nach einem der vorhergehenden Ansprüche,
**dadurch gekennzeichnet,**
**dass** mindestens ein zweites, stromleitfähiges Korrekturelement (TE1, TE2, TE3, TE4) als Abstimm-Mittel zur Abstimmung des Stromflusses (I2*(X)) auf dem ersten Korrekturelement (CE1, CE4) und/oder auf der Leiterplatte (LP) zusätzlich derart vorgesehen ist, dass ein veränderter elektrischer Stromfluss (I2(X)) auf dem ersten und/oder zweiten Korrekturelement (CE1, CE4, TE1, TE2, TE3, TE4) bewirkt ist, der weitgehend gegenphasig zum Stromfluss (I1(X)) auf der Leiterplatte (LP) verläuft, wodurch aufgrund des überlagerten Gesamtstromflusses (RSV(X)) auf der Leiterplatte (LP), dem ersten und/oder zweiten Korrekturelement (CE1, CE4, TE1, TE2, TE3, TE4), sowie der Antenne (AT1) zusammengenommen eine weitgehend homogene SAR-Verteilung (S(X,Y,Z)) über die Gesamtfläche (L·B) der dem Benutzer zugewandten Vorderseite der Leiterplatte (LP) betrachtet oder in einem vorgebbaren Volumenbereich (VOL) um die Koppelstruktur aus der Leiterplatte (LP) sowie der dort angekoppelten Antenne (AT1) herum resultiert.

8. Funkkommunikationsgerät (MP) nach Anspruch 7,
**dadurch gekennzeichnet,**
**dass** das zweite Korrekturelement (TE1, TE2, TE4) mit dem ersten Korrekturelement (CE1, CE4) und/oder mit der Leiterplatte (LP) galvanisch verbunden ist.

9. Funkkommunikationsgerät (MP) nach Anspruch 7,
**dadurch gekennzeichnet,**
**dass** das zweite Korrekturelement (TE3) kapazitiv oder induktiv an das erste Korrekturelement (CE1) und/oder an die Leiterplatte (LP) gekoppelt ist.

10. Funkkommunikationsgerät (MP) nach einem der Ansprüche 7 bis 9,
**dadurch gekennzeichnet,**
**dass** das zweite Korrekturelement (TE1) integraler Bestandteil des ersten Korrekturelements (CE1) und/oder der Leiterplatte (LP) ist.

11. Funkkommunikationsgerät (MP) nach einem der Ansprüche 7 bis 9,
**dadurch gekennzeichnet,**
**dass** das zweite Korrekturelement (TE3) separat vom ersten Korrekturelement (CE1) und/oder separat von der Leiterplatte (LP) vorgesehen ist.

12. Funkkommunikationsgerät (MP) nach einem der Ansprüche 7 bis 11,
**dadurch gekennzeichnet,**
**dass** das zweite Korrekturelement (TE1, TE2, TE3, T4) als eine mäanderförmige Schleifenstruktur oder in Form von ein oder mehreren Flächenelementen ausgebildet ist.

13. Funkkommunikationsgerät (MP) nach einem der Ansprüche 7 bis 12,
**dadurch gekennzeichnet,**
**dass** das erste und das zweite Korrekturelement (CE1, TE1, TE2, TE3) im wesentlichen in derselben Lageebene positioniert sind.

14. Funkkommunikationsgerät (MP) nach Anspruch 13,
**dadurch gekennzeichnet,**
**dass** das erste und das zweite Korrekturelement (CE1, TE1, TE2, TE3) jeweils in einem vorgebbaren Höhenabstand (HA) zur Leiterplatte (LP) angeordnet sind.

15. Funkkommunikationsgerät (MP) nach Anspruch 14,
**dadurch gekennzeichnet,**
**dass** das erste und das zweite Korrekturelement (CE1, TE1, TE2, TE3) im Höhenabstand (HA) zwischen 0,1 und 0,6 cm von einer Bestückungsfläche auf der Vorderseite der Leiterplatte (LP) entfernt angeordnet sind.

16. Funkkommunikationsgerät (MP) nach einem der Ansprüche 7 bis 12,
**dadurch gekennzeichnet,**
**dass** das zweite Korrekturelement (TE4) in einer Lageebene angebracht ist, die von der Lageebene des ersten Korrekturelements (CE4) verschieden ist.

17. Funkkommunikationsgerät (MP) nach einem der Ansprüche 7 bis 16,
**dadurch gekennzeichnet,**
**dass** das zweite Korrekturelement (TE3) durch ein ESD-Schutzelement (ESD= electrostatic discharge), insbesondere durch ein metallisches Display-Fenster, gebildet ist.

18. Funkkommunikationsgerät (MP) nach einem der Ansprüche 7 bis 16,
**dadurch gekennzeichnet,**
**dass** das zweite Korrekturelement (TE1, TE4) im wesentlichen orthogonal zur Längserstreckung (L) des ersten Korrekturelements (CE1, CE4) verläuft.

19. Funkkommunikationsgerät (MP) nach einem der Ansprüche 7 bis 18,
**dadurch gekennzeichnet,**
**dass** das zweite Korrekturelement (TE1, TE2, TE3, TE4) derart bezüglich der Leiterplatte (LP), der Antenne (AT1), und/oder dem ersten Korrekturelement (CE1, CE4) positioniert und dimensioniert ist, dass sich die minimale, resultierende SAR-Verteilung etwa bei der Resonanzfrequenz im Funkbetrieb der Antenne (AT1) ergibt.

20. Funkkommunikationsgerät (MP) nach einem der Ansprüche 7 bis 19,
**dadurch gekennzeichnet,**
**dass** das zweite Korrekturelement (TE1, TE2, TE3, TE4) derart dimensioniert ist, dass eine von ihm fiktiv eingeschlossene Bestückungsfläche der Vorderseite der Leiterplatte (LP) höchstens dem 0,2 bis 0,5-fachen des vom ersten Korrekturelement (CE1, CE4) fiktiv eingefassten Teils der Leiterplattenfläche (L·B) entspricht.

21. Funkkommunikationsgerät (MP) nach einem der Ansprüche 7 bis 20,
**dadurch gekennzeichnet,**
**dass** das zweite zusätzliche Korrekturelement (TE1, TE2, TE3, TE4) auf der der Antenne (AT1) gegenüberliegenden Vorderseite der Leiterplatte (LP) angeordnet ist.

22. Funkkommunikationsgerät (MP) nach einem der Ansprüche 7 bis 21,
**dadurch gekennzeichnet,**
**dass** an der Leiterplatte (LP) mindestens ein drittes zusätzliches, stromleitfähiges Korrekturelement (ZV6) derart als Abstimm-Mittel angekoppelt und ausgebildet ist, dass für einen auf der Leiterplatte (LP) etwaig durch elektromagnetische Funkstrahlungsfelder der Antenne (AT1) hervorgerufenen elektrischen Strom (I1) eine gezielte, fiktive Stromwegverlängerung unter gleichzeitig weitgehender Beibehaltung der ursprünglich vorgegebenen Längs- und Querabmessungen der Leiterplatte (LP) bewirkt ist.

23. Funkkommunikationsgerät (MP) nach Anspruch 22,
**dadurch gekennzeichnet,**
**dass** das dritte Korrekturelement (ZV6) im Bereich desjenigen stirnseitigen Endes der Leiterplatte (LP) angebracht ist, das dem stirnseitigen Ende der Leiterplatte (LP) mit dem Ankoppelbereich der Antenne (AT1) gegenüberliegt.

24. Funkkommunikationsgerät (MP) nach einem der Ansprüche 22 oder 23,
**dadurch gekennzeichnet,**
**dass** das dritte Korrekturelement (ZV6) mäanderförmig ausgebildet ist.

25. Funkkommunikationsgerät (MP) nach einem der Ansprüche 22 bis 24,
**dadurch gekennzeichnet,**
**dass** das dritte zusätzliche Korrekturelement (ZV6) auf der Antenne (AT1) gegenüberliegenden Vorderseite der Leiterplatine (LP) angeordnet ist.

26. Funkkommunikationsgerät (MP) nach einem der vorhergehenden Ansprüche,
**dadurch gekennzeichnet,**
**dass** das erste, zweite oder dritte Korrekturelement (CE1, CE4, TE1, TE2, TE3, TE4, ZV6) derart positioniert ist, dass seine gedachte orthogonale Projektion bezüglich einer Bauelementbestückungsfläche der Leiterplatte (LP) im wesentlichen innerhalb einer durch deren Seitenränder (SRL, SRR, SRO, SRU) aufgespannten Begrenzungsfläche liegt.

27. Funkkommunikationsgerät (MP) nach Anspruch 26,
**dadurch gekennzeichnet,**
**dass** das erste, zweite oder dritte Korrekturelement (CE1, CE4, TE1, TE2, TE3, TE4, ZV6) in einem Raumbereich oberhalb, oder unterhalb, oder seitlich an der durch die Seitenränder (SRL, SRR, SRO, SRU) der Leiterplatte (LP) aufgespannten Begrenzungsfläche als mindestens eine weitere Schicht angeordnet ist.

28. Funkkommunikationsgerät (MP) nach einem der vorhergehenden Ansprüche,
**dadurch gekennzeichnet,**
**dass** für das erste, zweite oder dritte Korrekturelement (CE1, CE4, TE1, TE2, TE3, TE4, ZV6) ein elektrisch leitfähiges Material, dielektrisches Material, oder magnetisch leitfähiges Material verwendet ist.

29. Funkkommunikationsgerät (MP) nach einem der vorhergehenden Ansprüche,
**dadurch gekennzeichnet,**
**dass** das erste, zweite oder dritte Korrekturelement (CE1, CE4, TE1, TE2, TE3, TE4, ZV6) durch ein oder mehrere drahtförmige Elemente, mindestens eine ein- oder mehrlagige, elektrisch leitfähige Folie, Beschichtung, und/oder durch ein sonstiges linienförmiges oder flächiges Element gebildet ist.

30. Funkkommunikationsgerät (MP) nach einem der vorhergehenden Ansprüche,
**dadurch gekennzeichnet,**
**dass** mindestens das erste, zweite oder dritte Korrekturelement (CE1, CE4, TE1, TE2, TE3, TE4, ZV6) durch mindestens eine Beschichtungslage in der Unter- und/oder Oberschale des Gehäuses (GH) des Funkkommunikationsgeräts gebildet ist.

31. Funkkommunikationsgerät (MP) nach einem der vorhergehenden Ansprüche,
**dadurch gekennzeichnet,**
**dass** die Leiterplatte (LP) im wesentlichen rechteckförmig ausgebildet ist.

32. Funkkommunikationsgerät (MP) nach einem der vorhergehenden Ansprüche,
**dadurch gekennzeichnet,**
**dass** die Antenne (AT1) als λ/4-Antenne oder PIFA (Planar Inverted F)-Antenne ausgebildet ist, die zusammen mit der Leiterplatte (LP) einen Strahlungsdipol bildet.

33. Leiterplatte (LP) mit mindestens einem zusätzlichen, SAR-Wert reduzierendem ersten Korrekturelement (CE1, CE4) für ein Funkkommunikationsgerät (MP) nach einem der vorhergehenden Ansprüche.

## Claims

1. A radio communications device (MP) with reduced SAR value comprising at least one circuit board (LP) and at least one antenna (AT1) coupled thereto for radiating and/or receiving electromagnetic radio radiation fields, the antenna (AT1) being arranged on a back side of the circuit board (LP) which, when the radio communications device (MP) is carried at the body and/or when the radio communications device (MP) is brought for talking and/or listening into the head section of the speaker, it is directed away from him
**characterised in that**
at least a first additional current conductive correction element (CE1) for the reduction of the SAR value is coupled to and formed at a front side of the circuit board (LP) opposite the antenna (AT1) and on the first correction element (CE1, CE4) and/or the circuit board (LP), additional tuning means are provided for tuning the phase position and/or amplitude of an electric current (I2), wherein the height of amplitude and/or phase position of electric currents (I3, I1, I2) on the antenna (AT1), on the circuit board (LP) and on the correction element (CE1, CE4) are adjusted in a resulting superimposed overall current flow (RSV(X)) in such a way that the maximum of the SAR distribution (S (X,Y)) resulting from these currents (I1, I2, I3) in the body tissue of an user is lowered when the radio communications device (MP) is carried or when the radio communications device (MP) is brought for talking and/or listening into the head section of this user.

2. The radio communications device according to claim 1,
**characterised in that**
the resulting, superimposed overall current flow (RSV(X)) from the electric currents (I1, I2, I3) on the circuit board (LP), the first correction element (CE1, CE4) and the antenna (AT1) altogether effects a widely homogenous SAR distribution (S(X,Y,Z)) regarded in a predeterminable area (L·B), directed to the front side of the circuit board (LP) or in a predeterminable volume range (VOL) around the coupling structure from the circuit board (LP) as well as the antenna (AT1) coupled thereto.

3. The radio communications device (MP) according to claim 1 or 2,
**characterised in that**
the first correction element (CE1, CE4) is galvanically connected to the ground (ERD) of the circuit board (LP).

4. The radio communications device (MP) according to claim 1 or 2,
**characterised in that**
the first correction element (CE1, CE4) is capacitively or inductively connected to the circuit board (LP).

5. The radio communications device (MP) according to one of the preceding claims,
**characterised in that**
the first correction element (CE1, CE4) is formed as a loop which extends partially or completely substantially along the margins (SRL, SRO, SRR, SRU) of the circuit board (LP).

6. The radio communications device (MP) according to claim 5,
**characterised in that**
the loop for the first correction element (CE1) is substantially formed in a rectangle shape.

7. The radio communications device (MP) according to any one of the preceding claims,
**characterised in that**
at least one second current conductive correction element (TE1, TE2, TE3, TE4) is additionally provided as a tuning means for tuning the current flow (I2(X)) on the first correction element (CE1, CE4) and/or on the circuit board (LP) such that a changed electric current flow (I2(X)) is effected on the first and/or second correction element (CE1, CE4, TE1, TE2, TE3, TE4) which runs widely counter-phase to the current flow (I1(X)) on the circuit board, whereby, due to the superimposed overall current flow (RSV(X)) on the circuit board (LP), the first and/or second correction element (CE1, CE4, TE1, TE2, TE3, TE4) as well as the antenna (AT1) taken together, a widely homogenous SAR-distribution (S(X;Y;Z)) results regarded over the overall area (L·B) of the front-side of the circuit board (LP) directed to the user or in a predeterminable volume range (VOL) around the coupling structure from the circuit board (LP) as well as the antenna (AT1) coupled thereto.

8. The radio communications device (MP) according to claim 7,
**characterised in that**
the second correction element (TE1, TE2, TE3, TE4) is galvanically connected to the first correction element (CE1, CE4) and/or to the circuit board (LP).

9. The radio communications device (MP) according to claim 7,
**characterised in that**
the second correction element (TE3) is capacitively or inductively connected to the first correction element (CE1) and/or to the circuit board (LP).

10. The radio communications device (MP) according to any one of the claims 7 to 9,
**characterised in that**
the second correction element (TE1) is an integral component of the first correction element (CE1) and/or of the circuit board (LP).

11. The radio communications device (MP) according to any one of claims 7 to 9,
**characterised in that**
the second correction element (TE3) is provided separately from the first correction element (CE1) and/or separately from the circuit board (LP).

12. The radio communications device (MP) according to any one of the claims 7 to 11,
**characterised in that,**
the second correction element (TE1) is formed as a meander-shaped loop structure or in the form of one or more area elements.

13. The radio communications device (MP) according to any one of the claims 7 to 12,
**characterised in that**
the first and the second correction element (CE1, TE1, TE2, TE3) are substantially positioned in the same position plane.

14. The radio communications device (MP) according to claim 13,
**characterised in that**
the first and/or second correction element (CE1, TE1, TE2, TE3) are respectively arranged in a predeterminable height distance (HA) to the circuit board (LP).

15. The radio communications device (MP) according to claim 14,
**characterised in that**
the first and the second correction element (CE1, TE1, TE2, TE3) are arranged in a height distance (HA) between 0,1 and 0,6 cm from the mounting area on the front side of the circuit board (LP).

16. The radio communications device (MP) according to any one of the claims 7 to 12,
**characterised in that**
the second correction element (TE4) is arranged in a position plane that is different from the position plane of the first correction element (CE4).

17. The radio communications device (MP) according to any one of the claims 7 to 16,
**characterised in that**
the second correction element (TE3) is formed by an ESD-protection element (ESD=electrostatic discharge), in particular by a metallic display window.

18. The radio communications device (MP) according to any one of the claims 7 to 16,
**characterised in that**
the second correction element (TE1, TE4) extends substantially orthogonal to the longitudinal extension (L) of the first correction element (CE1, CE4).

19. The radio communications device (MP) according to any one of the claims 7 to 18,
**characterised in that**
the second correction element (TE1, TE2, TE3, TE4) is positioned and dimensioned with respect to the circuit board (LP), the antenna (AT1) and/or the first correction element (CE1, CE4) such that the minimum resulting SAR distribution arises approximately at the resonance frequency in the radio operation of the antenna (AT1).

20. The radio communications device (MP) according to any one of the claims 7 to 19,
**characterised in that**
the second correction element (TE1, TE2, TE3, TE4) is dimensioned in such a manner that a mounting area of the front side of the circuit board (LP), fictively enclosed by it, corresponds to at most 0,2 to 0,5-times of the part of the area of the circuit board (L·B) fictively enclosed by the first correction element (CE1, CE4).

21. The radio communications device (MP) according to any one of the claims 7 to 20,
**characterised in that**
the second additional correction element (TE1, TE2, TE3, TE4) is arranged on the front side of the circuit board (LP), opposite the antenna (AT1).

22. The radio communications device (MP) according to any one of the claims 7 to 21,
**characterised in that**
at least a third additional conductive correction element (ZV6) is coupled to and formed at the circuit board (LP) as a tuning means such that an aimed, fictive prolongation of the way of the current under simultaneous largely maintenance of the originally given longitudinal and lateral dimensions of the circuit board (LP) is effected for an electric current (I1) possibly caused on the circuit board (LP) by electro-magnetic radio radiation fields of the antenna (AT1).

23. The radio communications device (MP) according to claim 22,
**characterised in that**
the third correction element (ZV6) is arranged in the section of that front end of the circuit board (LP) which is opposite the front end of the circuit board with the coupling section of the antenna (AT1).

24. The radio communications device (MP) according to any one of claims 22 or 23,
**characterised in that**
the third correction element (ZV6) is formed in a meander-shape.

25. The radio communications device (MP) according to any one of claims 22 to 24,
**characterised in that**
the third additional correction element (ZV6) is arranged on the front side of the circuit board (LP) which is opposite the antenna (AT1).

26. The radio communications device (MP) according to any one of the preceding claims,
**characterised in that**
the first, second or third correction element (CE1, CE4, TE1, TE2, TE3, TE4, ZV6) are positioned in such a way that its thought orthogonal projection with respect to a component mounting area of the circuit board (LP) substantially lies within a limitation area spanned by their margins (SRL, SRR, SRO, SRU).

27. The radio communications device (MP) according to claim 26,
**characterised in that**
the first, second or third correction element (CE1, CE4, TE1, TE2, TE3, TE4, ZV6) is arranged in a space range above or below or sidewise to the limitation area spanned by the margin (SRL, SRR, SRO, SRU) of the circuit board as at least one further layer.

28. The radio communications device (MP) according to any one of the preceding claims,
**characterised in that**
an electrically conductive material, dielectric material or magnetically conductive material is used for the first, second or third correction element (CE1, CE4, TE1, TE2, TE3, TE4, ZV6).

29. The radio communications device (MP) according to any one of the preceding claims,
**characterised in that**
the first, second or third correction element (CE1, CE4, TE1, TE2, TE3, TE4, ZV6) is formed by one or more wire-like elements, at least one single- or multi-layer, electrically conductive foil, coating, and/or by any other linear or area element.

30. The radio communications device (MP) according to any one of the preceding claims,
**characterised in that**
at least the first, second or third correction element (CE1, CE4, TE1, TE2, TE3, TE4, ZV6) is formed by at least one coating layer in the lower and/or upper shell of the casing (GH) of the radio communications device.

31. The radio communications device (MP) according to any one of the preceding claims,
**characterised in that**
the circuit board (LP) has essentially a rectangular shape.

32. The radio communications device (MP) according to any one of the preceding claims,
**characterised in that**
the antenna (AT1) is formed as λ/4-antenna or PIFA (Planar Inverted F) - antenna which forms a radiation dipole together with the circuit board (LP).

33. Circuit board (LP) comprising at least an additional, SAR
value reducing correction element (CE1, CE4) for a radio communications device (MP) according to any one of the preceding claims.

## Revendications

1. Dispositif de communication radio (MP) avec une valeur de SAR réduite comportant au moins une carte imprimée (LP) et au moins une antenne (AT1) couplée à celle-ci pour émettre et/ou recevoir des champs de radiation électromagnétique (AT1), l'antenne étant agencée sur une face arrière de la carte imprimée (LP) qui, quand le dispositif de communication radio (MP) est portée au corps et/ou quand le dispositif de communication radio (MP) est apporté dans la section de tête d'un parleur pour parler et/ou pour écouter, est détournée de lui,
**caractérisé en ce qu'**
au moins un premier élément de correction (CE1) conducteur de courant (CE1) pour la réduction de la valeur de SAR est couplé à et est formé à la face avant de la carte imprimée (LP) opposée à l'antenne (AT1), et sur le premier élément de correction (CE1, CE4) et/ou la carte imprimée (LP), des moyens de syntonisation additionnels sont prévus pour syntoniser la position de phase et / ou amplitude d'un courant électrique (I2), la hauteur d'amplitude et/ou la position de phase des courants électriques (I3, I1, I2) sur l'antenne (AT1), sur la carte imprimée (LP) et sur l'élément de correction (CE1, CE4) étant tellement réglées l'une à l'autre dans un flux de courant total (RSV(X)) superposé résultant que le maximum de la distribution de SAR (S(X,Y)) résultante de ces courants (I1, 12, I3) dans le tissu de corps d'un utilisateur est diminué quand le dispositif de communication radio (MP) est porté ou quand le dispositif de communication radio (MP) est apporté dans la section de tête de cet utilisateur.

2. Dispositif de communication radio (MP) selon la revendication 1,
**caractérisé en que** le flux de courant superposé résultant des flux électriques (I1, I2, I3) sur la carte imprimée (LP), le premier élément de correction (CE1, CE4) et l'antenne (AT1) au total effectue une distribution de SAR largement homogène (S(X;Y;Z)) considérée dans une surface prédéterminable (L·B) de la face avant orientée à l'utilisateur de la carte imprimée (LP) ou dans une région de volume (VOL) prédéterminable autour de la structure de couplage de la carte imprimée (LP) ainsi que l'antenne (AT1) couplée à celle-ci.

3. Dispositif de communication radio (MP) selon la revendication 1 ou 2,
**caractérisé en ce que** le premier élément de correction (CE1, CE4) est connecté galvaniquement à la masse (ERD) de la carte imprimée (LP).

4. Dispositif de communication radio (MP) selon la revendication 1 ou 2,
**caractérisé en ce que** le premier élément de correction (CE1, CE4) est connecté capacitivement ou inductivement à la carte imprimée (LP).

5. Dispositif de communication radio (MP) selon l'une des revendications précédentes, **caractérisé en ce que** le premier élément de correction (CE1, CE4) est formé en tant que boucle qui s'étend partiellement ou complètement essentiellement le long des marges (SRL, SRO, SRR, SRU) de la carte imprimée.

6. Dispositif de communication radio (MP) selon la revendication 5,
**caractérisé en ce que** le boucle pour le premier élément de correction (CE1) est essentiellement formé dans une forme rectangulaire.

7. Dispositif de communication radio (MP) selon l'une des revendications précédentes, **caractérisé en ce qu'**au moins un deuxième élément (TE1, TE2, TE3, TE4) de correction conducteur de courant est additionnellement prévu en tant que moyen de syntonisation pour syntoniser le flux de courant (I2(X)) sur le premier élément de correction (CE1, CE4, TE1, TE2, TE3, TE4) qui court largement contre-phase au flux de courant (I1 (X)) sur la carte imprimée, par quoi, à cause du flux de courant total superposé sur la carte imprimée (LP), le premier et/ou le deuxième élément de correction (CE1, CE4, TE1, TE2, TE3, TE4) ainsi que l'antenne (AT1) pris ensemble, une distribution largement homogène de SAR (S(X;Y;Z)) résulte considérée sur la surface totale (L·B) de la face avant de la carte imprimée (LP) orientée vers l'utilisateur ou dans une région de volume (VOL) autour de la structure de couplage de la carte imprimée (LP) ainsi que l'antenne (AT1) couplée à celle-ci.

8. Dispositif de communication radio (MP) selon la revendication 7,
**caractérisé en ce que** le deuxième élément de correction (TE1, TE2, TE3, TE4) est connecté galvaniquement au premier élément de correction (CE1, CE4) et/ou à la carte imprimée.

9. Dispositif de communication radio (MP) selon la revendication 7, **caractérisé en ce que** le deuxième élément de correction (TE3) est connecté capacitivement ou inductivement au premier élément de correction (CE1) et/ou à la carte imprimée (LP).

10. Dispositif de communication radio (MP) selon l'une des revendications 7 à 9,
**caractérisé en ce que** le deuxième élément de correction (TE1) est un composant intégral du premier élément de correction (CE1) et de la carte imprimée (LP).

11. Dispositif de communication radio (MP) selon l'une des revendications 7 à 9,
**caractérisé en ce que** le deuxième élément de correction (TE3) est prévu
séparément du premier élément de correction (CE1) et/ou séparément de la carte imprimée (LP).

12. Dispositif de communication radio (MP) selon l'une des revendications 7 à 11,
**caractérisé en ce que** le deuxième élément de correction (TE1, TE2, TE3, TE4) est formé en tant qu'une structure de boucle en forme de méandre ou en forme d'un ou plusieurs éléments de surface.

13. Dispositif de communication radio (MP) selon l'une des revendications 7 à 12,
**caractérisé en ce que** le premier et le deuxième élément de correction (CE1, TE1, TE2, TE3) sont essentiellement positionnés dans le même plan de position.

14. Dispositif de communication radio (MP) selon la revendication 13, **caractérisé en ce que** le premier et/ou le deuxième élément de correction (CE1, TE1, TE2, TE3) sont respectivement agencés dans une distance de hauteur prédéterminable (HA) de la carte imprimée (LP).

15. Dispositif de communication radio (MP) selon la revendication 14, **caractérisé en ce que** le premier et le deuxième élément de correction (CE1, TE1, TE2, TE3) sont agencés dans une distance de hauteur (HA) entre 0,1 et 0,6 cm de la surface de garnissage sur la face avant de la carte imprimée.

16. Dispositif de communication radio (MP) selon l'une des revendications 7 à 12,
**caractérisé en ce que** le deuxième élément de correction (TE4) est agencé dans un plan de position qui est différent du plan de position du premier élément de correction (CE4).

17. Dispositif de communication radio (MP) selon l'une des revendications 7 à 16,
**caractérisé en ce que** le deuxième élément de correction (TE3) est formé par un élément de protection ESD (ESD = electrostatic discharge), en particulier par une fenêtre display métallique.

18. Dispositif de communication radio (MP) selon l'une des revendications 7 à 16,
**caractérisé en ce que** l'élément de correction (TE1, TE4) s'étend essentiellement orthogonal à étendue longitudinale (L) du premier élément de correction (CE1, CE4).

19. Dispositif de communication radio (MP) selon l'une des revendications 7 à 18,
**caractérisé en ce que** le deuxième élément de correction (TE1, TE2, TE3, TE4) est tellement positionné et dimensionné concernant la carte imprimée (LP), l'antenne (AT1) et/ou le premier élément de correction (CE1, CE4) que la distribution de SAR minimum résultante arrive approximativement à la fréquence de résonance lors de l'opération radio de l'antenne (AT1).

20. Dispositif de communication radio (MP) selon l'une des revendications 7 à 19,
**caractérisé en ce que** le deuxième élément de correction (TE1, TE2, TE3, TE4) est tellement dimensionné qu'une surface de garnissage de la face avant de la carte imprimée (LP), fictivement enserrée par lui, correspond au maximum à 0,2 à 0,5-fois la partie de la surface de la carte imprimée (L·B) fictivement enserrée par le premier élément de correction (CE1, CE4).

21. Dispositif de communication radio (MP) selon l'une des revendications 7 à 20,
**caractérisé en ce que** le deuxième élément additionnel de correction (TE1, TE2, TE3, TE4) est agencé sur la face avant de la carte imprimée (LP), opposée à l'antenne (AT1).

22. Dispositif de communication radio (MP) selon l'une des revendications 7 à 21,
**caractérisé en ce qu'**au moins un troisième élément additionnel de correction (ZV6) est tellement couplé à et agencé à la carte imprimée (LP) en tant que moyen de syntonisation qu'une prolongation fictive ciblée du chemin du courant sous maintenance simultanée de la dimension longitudinale et latérale originalement donnée de la carte imprimée (LP) est effectuée pour un courant électrique (11) possiblement causé sur la carte imprimée (LP) par des champs de radiation électromagnétique de l'antenne (AT1).

23. Dispositif de communication radio (MP) selon la revendication 22, **caractérisé en ce que** le troisième élément de correction (ZV6) est agencé dans la section de la fin de front de la carte imprimée (LP) qui est opposée à la fin de front de la carte imprimée avec la section de couplage de l'antenne (AT1).

24. Dispositif de communication radio (MP) selon l'une des revendications 22 à 24, **caractérisé en ce que** le troisième élément de correction (ZV6) est agencé dans une forme de méandre.

25. Dispositif de communication radio (MP) selon l'une des revendications 22 à 24, **caractérisé en ce que** le troisième élément additionnel de correction (ZV6) est agencé sur la face avant de la carte imprimée (LP) qui est opposée à l'antenne (AT1).

26. Dispositif de communication radio (MP) selon l'une des revendications précédentes, **caractérisé en ce que** le premier, deuxième ou troisième élément de correction (CE1, CE4, TE1, TE2, TE3, TE4, ZV6) sont tellement positionnés que sa projection orthogonale pensée concernant une surface de garnissage de la carte imprimée (LP) est essentiellement dans une surface de limitation serrée par leur marges (SRL, SRR, SRO, SRU).

27. Dispositif de communication radio (MP) selon la revendication 26, **caractérisé en ce que** le premier, deuxième ou troisième élément de correction (CE1, CE4, TE1, TE2, TE3, TE4, ZV6) est agencé dans une région d'espace au-dessus de ou au-dessous de ou latéralement à la surface de limitation serrée par le marge (SRL, SRR, SRO, SRU) de la carte imprimée en tant qu'au moins une couche additionnelle.

28. Dispositif de communication radio (MP) selon l'une des revendications précédentes, **caractérisé en ce que** un matériau électriquement conducteur, un matériau diélectrique ou un matériau magnétiquement conducteur est utilisé pour le premier, le deuxième ou le troisième élément de correction (CE1, CE4, TE1, TE2, TE3, TE4, ZV6).

29. Dispositif de communication radio (MP) selon l'une des revendications précédentes, **caractérisé en ce que** le premier, le deuxième ou le troisième élément de correction (CE1, CE4, TE1, TE2, TE3, TE4, ZV6) est formé par un ou plusieurs éléments de fils, par au moins une feuille électriquement conductrice singulière ou multiple, revêtement électriquement conducteur singulier ou multiple, et/ou par un autre élément électriquement conducteur singulier ou multiple de ligne ou de surface.

30. Dispositif de communication radio (MP) selon l'une des revendications précédentes, **caractérisé en ce qu'**au moins le premier, deuxième ou troisième élément de correction (CE1, CE4, TE1, TE2, TE3, TE4, ZV6) est formé par au moins une couche de revêtement dans le bouclier bas et/ou haut du boîtier (GH) du dispositif de communication radio.

31. Dispositif de communication radio (MP) selon l'une des revendications précédentes, **caractérisé en ce que** la carte imprimée (LP) a essentiellement une forme rectangulaire.

32. Dispositif de communication radio (MP) selon l'une des revendications précédentes, **caractérisé en ce que** l'antenne (AT1) est formée en tant que antenne de λ/4 ou antenne de PIFA (Planar Inverted F) qui forme un dipôle de radiation conjointement avec la carte imprimée.

33. Carte imprimée (LP) comportant au moins un élément additionnel de correction (CE1, CE4) réduisant la valeur de SAR pour un dispositif de communication radio (MP) selon l'une des revendications précédentes.
